# EUROPÄISCHE PATENTSCHRIFT

(11) **EP 1 267 114 B1**
(45) Veröffentlichungstag und Bekanntmachung des Hinweises auf die Patenterteilung: **21.02.2007**
(21) Anmeldenummer: 02006655.1
(22) Anmeldetag: 26.03.2002
(51) Int. Cl.: F16L 25/00, F16L 47/00, F16L 27/12

(54) **Schnellkoppelnde Rohrverbindungsanordnung mit Höhenanpassung**
Quick-acting connector with arrangement for height adjustment
Raccord rapide avec arrangement pour l'adaptation en hauteur

(30) Priorität: 27.03.2001 DE 10115141
(43) Veröffentlichungstag der Anmeldung: 18.12.2002
(73) Patentinhaber: Uponor Anger GmbH, 45768 Marl (DE)
(72) Erfinder: Guldner, Markus, 45966 Gladbeck (DE)
(74) Vertreter: Gehrke, Peter P.

(56) Entgegenhaltungen:
- WO-A-92/11484
- DE-A- 3 110 734
- NL-A- 6 703 748
- US-A- 3 927 783
- US-A- 4 306 743
- US-A- 5 466 020
- US-B1- 6 199 918

## Beschreibung

Die Erfindung betrifft eine schnellkoppelnde Rohrverbindungsanordnung zur lösbaren Verbindung einer ersten Verbindungsleitung mit einer zweiten Verbindungsleitung, welche ein unteres hohlzylinderförmiges Teil und ein an das untere Teil sich anschließendes oberes hohlzylinderförmiges Teil aufweist, das untere Teil zur Aufnahme eines oberen Endes der zweiten Verbindungsleitung geeignet ist und das obere Teil zur Aufnahme des zweiten Endes der ersten Verbindungsleitung geeignet ist mit Anpassung an unterschiedlichste Bodenhöhen.

Im Stand der Technik sind Rohrverbindungen bekannt, welche ein Innenrohr und an den freien Enden des Innenrohrs angeordnete Dichtungsringe umfassen. Das Innenrohr wird in die als Muffen ausgebildeten freien Enden der Verbindungsleitungen eingefügt. So wird in der US-PS 51 06 129 eine Rohrverbindungsanordnung beschrieben, welche die muffenförmige Ausbildung oder Ausweitung der freien Rohrenden von zwei zu verbindenden Verbindungsleitungen erforderlich macht. An den Innenseiten der Muffen liegen die Dichtungsringe an. Aufgrund der weiten Beabstandung der Außenwand der einen Verbindungsleitung von der Innenseite des freien Endes der anderen Verbindungsleitung ist die Beweglichkeit bzw. Verschiebbarkeit der Verbindungsleitungen zueinander ermöglicht. Es zeigt sich jedoch, dass der Verschiebung der Verbindungsleitungen koaxial zu ihren Mitte-Längsachsen Grenzen gesetzt sind, bedingt durch das Ausmaß der Längen der Ausweitung der freien Rohrenden.

Herkömmliche Rohrverbindungsanordnungen zur lösbaren Verbindung von Verbindungsleitungen zum Verbau in Erdreich umfassen eine einstückige Rohrverbindung mit zwei hohlkörperförmigen Teilen sowie zwei Verbindungsleitungen. Das untere Teil ist zur Aufnahme eines oberen Endes einer Verbindungsleitung geeignet und das obere Teil ist zur Aufnahme des zweiten Endes einer weiteren Verbindungsleitung vorgesehen. Die Rohrverbindung ist mit elastischen Rastmitteln mit Raststegen und an dem unteren Ende der Raststege nach innen sich erstreckenden Rastnasen ausgebildet.

Die Lagesicherung der herkömmlichen Rohrverbindungsanordnung ist durch deren Lösbarkeit behindert, so dass diese nicht oder nur wenig dem in dem Erdreich auftretenden Erdreichversatz nachgeben kann.

Unter Erdreichversatz werden auch unterschiedliche Verschiebungen verschiedener Schichten des die Rohrverbindungsanordnung mit der ersten und zweiten Verbindungsleitung umgebenden Erdreichs zueinander in horizontaler Richtung, bzw. schräg auf diese, insbesondere im spitzen Winkel zu der Rohrverbindungsanordnung bzw. zu den Verbindungsleitungen, verstanden. Diese Schichtverschiebungen können z.B. durch auf das Erdreich einwirkende Verkehrslasten von Fahrzeugen hervorgerufen werden und führen bei den herkömmlichen Rohrverbindungsanordnungen zu dem sogenannten Radialversatz der zu verbindenden Verbindungsleitungen relativ zueinander, so dass die Mitte-Längsachsen der Verbindungsleitungen nicht miteinander übereinstimmen, sondern beispielsweise im spitzen Winkel zueinander liegen, oder parallel zueinander verschoben sind, welcher Radialversatz zu Verformungen in dem die Verbindungsleitung aufnehmenden Bereich der herkömmlichen Rohrverbindungsanordnung führt, welche mangelnde Lagesicherung der Verbindungsleitungen und mechanische Beschädigungen in dem der herkömmlichen Rohrverbindungsanordnung zugewandten Ende der zweiten Verbindungsleitung bedingen.

So wird in WO 92 11484 A eine Rohrverbindung als Verbindungssystem für ein Absperrorgan einer Wasserleitung beschrieben, welches nicht zum Verbau im Erdreich geeignet ist. Ein Ende einer Verbindungsleitung wird mit einer Wasserarmatur dicht, vorzugsweise wasserdicht, verbunden. Das Verbindungssystem weist an der Außenseite der weiteren Verbindungsleitung in Umfangsrichtung angeordnete Rippen auf, welche mit einem im Querschnitt U-förmigen Kopplungsteil verbunden wird. Der äußere Schenkel des Kopplungsteils hat innenseitig einen Ansatz, auf welchem ein Verbindungsstück ruht. Diese Verbindungsstück greift hierbei zwischen zwei benachbarte Rippen des Rohrs ein. Die herkömmliche Rohrverbindung weist zwar eine hinreichende Dichtigkeit auf, kann jedoch lediglich auf die Verbindung eines Rohrs mit der Wasserarmatur als Absperrorgan bereitstellen.

Aufgabe soll es sein, eine Rohrverbindungsanordnung bereitzustellen, welche eine hinreichende dauerhafte Lagesicherung der zweiten Verbindungsleitung in der Rohrverbindung ermöglicht.

Hinzukommend soll das Arretieren der Rohrverbindungsanordnung dauerhaft sein und von möglichst geringem Gewicht. Ebenso soll möglichst die komplizierte Handhabung und der Einsatz von speziellen Werkzeugen vermieden werden, so dass gerade die bereitzustellende Rohrverbindungsanordnung keine hohen Anforderungen an die Geschicklichkeit des Benutzers stellen soll. Ebenso soll die Rohrverbindungsanordnung sowohl durch niedrige Herstellungskosten wie auch durch niedrige Wartungskosten sich auszeichnen, so dass der zeitliche Aufwand für die Kopplung der Verbindungsleitungen und möglicherweise für das Entkoppeln derselben begrenzt ist und kein besonders qualifiziertes Personal eingesetzt werden muss.

Die Aufgaben werden gelöst durch die Rohrverbindungsanordnung gemäß Hauptanspruch. Die Unteransprüche betreffen weitere Ausgestaltungen und Weiterentwicklungen der Erfindung.

Die Erfindung betrifft eine Rohrverbindungsanordnung zur lösbaren Verbindung einer ersten Verbindungsleitung mit einer zweiten Verbindungsleitung zum Verbau in Erdreich, umfassend
a) eine Rohrverbindung mit zwei hohlkörperförmigen Teilen, eine erste Verbindungsleitung und eine zweite Verbindungsleitung, wobei das untere Teil sich an das obere Teil anschließt,
b) das untere Teil zur Aufnahme eines oberen Endes der zweiten Verbindungsleitung geeignet ist und das obere Teil zur Aufnahme des zweiten Endes der ersten Verbindungsleitung geeignet ist in Schließstellung und das obere Ende der zweiten Verbindungsleitung mit dem unteren Teil in Eingriff gelangt
   und
c) die Rohrverbindung Rastmittel mit Rastnasen aufweist,
d) an dem unteren Teil mehrere Rastmittel zum lösbaren Koppeln des oberen Endes der zweiten Verbindungsleitung in Schließstellung angeordnet sind, welche Rastmittel an dem unteren Rand des Mantels des unteren Teils in Umlaufrichtung angeformt sind, und dass
e) die Rastmittel elastisch ausgebildet sind,
f) die Rastmittel voneinander gleichmäßig beabstandet sind, und dass
g) ein Mantel einen Innenraum zur Aufnahme des oberen Endes der zweiten Verbindungsleitung begrenzt, und wobei
h) die Rastmittel Raststege aufweisen und an dem unteren Ende der Raststege nach innen sich erstreckende Rastnasen umfassen,
i) die zweite Verbindungsleitung an ihrem oberen Ende an ihrer Außenseite ein oder mehrere Gegenrastmittel aufweist, welche Gegenrastmittel mit den Rastmitteln in Schließstellung im Eingriff sind
   und dass
j) die Rohrverbindung einstückig ausgebildet ist, und wobei
k) an der Außenseite des zweiten Verbindungsleitung in Umfangsrichtung angeordnete Rippen angeformt sind, welche dadurch gekennzeichnet ist, dass
l) das Gegenrastmittel ein an der Außenseite des oberen Endes der zweiten Verbindungsleitung eine Rippe ist, welche Rippe an der Außenseite des oberen Endes der zweiten Verbindungsleitung angeformt ist, und welche Rippe von dem Rastmittel in Schließstellung untergriffen ist.

Unter Verbindungsleitungen werden im Sinne der Erfindung auch Rohre zu verstehen sein, welche begehbare oder nicht begehbare sind, oder auch beliebige Hohlräume, in der Regel unterhalb oder in der Erde zum Beispiel einer Straße. So können die Verbindungsleitung auch Steigleitungsrohre oder Schächte sein. Die Verbindungsleitungen können von elastischer Art sein, beispielsweise aus Kunststoff, teleskopartig, ineinander verschiebbar oder ziehharmonikaartig ausgebildet sein. Unter Schließstellung wird im Sinne der Erfindung auch verstanden, dass die erfindungsgemäße Rohrverbindungsanordnung die erste und die zweite Verbindungsleitung bzw. deren Enden aufnimmt. Unter Offenstellung oder Ruhestellung wird im Sinne der Erfindung auch verstanden die erfindungsgemäße Rohrverbindungsanordnung ohne Verbindungsleitungen bzw. das Entkoppeln der Rohrverbindung der erfindungsgemäßen Rohrverbindungsanordnung von den ersten und / oder von der zweiten Verbindungsleitung.

Durch das Einschieben des oberen Endes der zweiten Verbindungsleitung in den von dem Mantel des unteren Teils seitlich begrenzten Innenraum und durch das Anlegen der Raststege und Rastnasen mehrerer Rastmittel an die Außenseite des Flansches oder durch das, vorzugsweise elastische, Anlegen der Rastnasen der elastischen Rastmittel an die obere Nutwange der in das obere Ende der zweiten Verbindungsleitung eingefrästen Nut wird in Schließstellung eine hinreichende Führung der zweiten Verbindungsleitung in der Rohrverbindung der erfindungsgemäßen Rohrverbindungsanordnung ermöglicht.

Bei Verbau der erfindungsgemäßen Rohrverbindungsanordnung in Erdreich verbleibt bei dem Auftreten des Erdversatzes die Rohrverbindung mit der zweiten Verbindungsleitung hinreichend gekoppelt, obwohl Schichten des Erdreichs auf die zweite Verbindungsleitung unterschiedlich stark einzuwirken vermögen, hierbei wird jedoch durch die Schwenkbewegung der zweiten Verbindungsleitung lediglich wenige der Schwenkbewegungsrichtung zugewandten Rastmittel nach außen gedrückt. Weil nur wenige der elastischen Rastmittel nach außen geschwenkt werden, also der Schwenkbewegung der zweiten Verbindungsleitung nachgeben, treten die im Vergleich zum Stand der Technik unerwünschten Verformungen des Mantels des unteren Teils der Rohrverbindung der erfindungsgemäßen Rohrverbindungsanordnung weitgehend nicht auf. Da nur wenige Rastmittel nach außen schwenken, diese wenigen Rastmittel auf den Mantel örtlich begrenzt einzuwirken vermögen und auch diese Rastmittel durch Eingriff dauerhaft mit der zweiten Verbindungsleitung gekoppelt verbleiben, sonstige Rastmittel, wie die der Schwenkbewegungsrichtung der zweiten Verbindungsleitung abgewandten, durch Eingriff dauerhaft mit der zweiten Verbindungsleitung gekoppelt sind und den Mantel auch in diesem Bereich an der zweiten Verbindungsleitung anliegen lassen, kann die erfindungsgemäße Rohrverbindungsanordnung sind mangelnde Lagesicherung der Verbindungsleitungen und mechanische Beschädigungen wie herkömmlichen Rohrverbindungsanordnung nicht zu beobachten. Auch läßt sich kein Radialversatz der zu verbindenden Verbindungsleitungen feststellen.

Durch die gleichmäßig voneinander beabstandeten Rastmittel an dem unteren Rand des Mantels der Rohrverbindung der erfindungsgemäßen Rohrverbindungsanordnung wirken die Kräfte örtlich begrenzt auf die Rohrverbindung ein, ohne wesentliche Mantelverformungen des unteren Teils, so dass die zweite Verbindungsleitung in der erfindungsgemäßen Rohrverbindungsanordnung lagesicher in Schließstellung bei Erdversatz verbleibt.

Es zeigt sich überraschenderweise, dass die durch Radialversatz hervorgerufenen Verformungen des unteren Teils und des oberen Teils unmerklich sind, weil nur die an dem Mantel des unteren Teils angeformten Rastmittel, welche der Schwenkbewegungsrichtung zugewandt sind, nach außen gedrückt werden, der Mantel hingegen aufgrund seiner mangelnden, wenn überhaupt nur geringfügigen, Verformung das obere Ende der zweiten Verbindungsleitung weiterhin Fläche an Fläche anliegend umgibt.

Weiterhin ist zu beobachten, dass die vielen an dem Mantel angeformten Rastmittel die Lagesicherung der zweiten Verbindungsleitung in dem Mantel unterstützen. Weil keine um die Mitte-Längsachse des Mantels tangentiale Bewegung der der Schwenkbewegungsrichtung zugewandten Rastmittel sich regelmäßig einstellt, verbleiben die Rastmittel im Eingriff mit der Nut bzw. Flansch der zweiten Verbindungsleitung.

Bei dem Übergang von der Schließstellung in die Offenstellung können die, vorzugsweise elastischen, Rastmittel mit ihren Raststegen und Rastnasen über den oberen Rand der Nut bzw. des Flansches der zweiten Verbindungsleitung gezogen werden, um die zweite Verbindungsleitung von dem unteren Teil ohne hohe Anforderungen an das Geschick und das Vermögen des Benutzers zu lösen.

Die erfindungsgemäße Rohrverbindungsanordnung zur lösbaren Verbindung einer ersten Verbindungsleitung mit einer zweiten Verbindungsleitung mit zwei im wesentlichen hohlkörperförmigen Teilen kann so ausgebildet sein, wobei das untere Teil sich an das obere Teil anschließt, das untere Teil zur Aufnahme eines oberen Endes der zweiten Verbindungsleitung geeignet ist und das obere Teil zur Aufnahme des zweiten Endes der ersten Verbindungsleitung geeignet sind, dadurch gekennzeichnet, dass in Schließstellung das obere Ende der zweiten Verbindungsleitung mit dem unteren Teil in Eingriff gelangt und das untere Teil das obere Ende der zweiten Verbindungsleitung aufnimmt und entweder das untere Teil Rastmittel zum lösbaren Koppeln des oberen Endes der zweiten Verbindungsleitung an dem unteren Teil in Schließstellung aufweisen oder das untere Teil mit dem oberen Ende der zweiten Verbindungsleitung verklebt sein kann.

Die erfindungsgemäße Rohrverbindungsanordnung umfasst eine Rohrverbindung mit zwei hohlkörperförmigen Teilen, die miteinander verbunden sind. Die Innenseiten der Teile sind derart ausgebildet, dass das untere Teil das obere Ende einer zweiten Verbindungsleitung bzw. eines Teils derselben und das obere Teil das untere Ende der ersten Verbindungsleitung bzw. eines Teils derselben form-, kraft- und / oder reibschlüssig aufnehmen können. Es ist bevorzugt, wenn die Enden mit ihren Außenflächen Fläche an Fläche an den Innenseiten der Teile anliegen.

Das untere Teil ist vorzugsweise hohlzylinderförmig ausgebildet und kann einen Mantel aufweisen, der z.B. nach oben in Richtung zu dem oberen Teil hin außenseitig und / oder innenseitig verjüngend ausgebildet sein kann. Der Mantel kann seitlich einen Innenraum begrenzen, welcher das obere Ende der zweiten Verbindungsleitung bzw. des Steigleitungsrohrs aufzunehmen vermag. Die innenseitige Ausgestaltung des unteren Teil ist entsprechend der Ausbildung des oberen Endes der zweiten Verbindungsleitung angepasst. So kann an der Innenseite des Mantels ein nach innen vortretender umlaufender oder unterbrochen umlaufender Steg angeformt sein. An der den Rastmitteln zugewandten Seite des Stegs kann der obere Rand des oberen Endes der zweiten Verbindungsleitung in Schließstellung anliegen. In dem von dem Mantel und von dem Steg begrenzten Innenraum kann das obere Ende der unten angeordneten, also zweiten, Verbindungsleitung mit glatter Außenseite aufgenommen werden.

Das untere Teil kann auch im Längsschnitt U-förmig ausgestaltet sein; der in dieser Ausgestaltung im Längsschnitt U-förmige Mantel kann zwei ein, vorzugsweise zu der Mitte-Längsachse der zweiten Verbindungsleitung bzw. Rohrverbindung koaxial ausgerichtetes, Mantelteil verbindende Schenkel aufweisen, welche vorzugsweise parallel zueinander ausgerichtet sind. Der U-förmige Mantel kann auch eine Weichdichtung aufnehmen, welche seitlich von seinen Schenkeln geführt wird. Die Weichdichtung kann die Außenseite der zweiten Verbindungsleitung von der Innenseite des unteren Teils flüssigkeitsdicht und / oder gasdicht abdichten.

Der untere Schenkel kann in eine Nase übergehen, die rechtwinklig beispielsweise zu dem unteren Schenkel ausgerichtet ist. Die Nase ist koaxial z.B. zu der Mitte-Längsachse A des unteren Teils bzw. zu der der zweiten Verbindungsleitung ausgerichtet. Der obere Schenkel, auch Steg genannt, geht auch in einen Mantelabschnitt über, welcher vorzugsweise rechtwinklig zu dem Steg bzw. zu dem oberen Schenkel ausgerichtet ist. Der Mantelabschnitt kann z.B. koaxial zu der Mitte-Längsachse A des unteren Teils bzw. zu der der zweiten Verbindungsleitung ausgerichtet sein. Der Mantelabschnitt geht vorzugsweise in ein Randteil über, welches flanschartig, vorzugsweise senkrecht zu der Mitte-Längsachse A nach innen, sich erstreckt.

Der Innenraum, welcher von dem U-förmigen Mantel mit dem Steg und dem unterem Schenkel sowie dem Mantelteil, gegebenenfalls von der Nase und dem Mantelabschnitt und / oder von dem Randteil begrenzt werden kann, kann ebenso der Aufnahme des oberen, z.B. mit einer glatten Außenseite ausgebildeten, Endes der zweiten Verbindungsleitung dienen. Die zweite Verbindungsleitung kann mit dem unteren Teil ebenso form-, reib- und / oder kraftschlüssig verbunden sein. Die zweite Verbindungsleitung kann auch auf das Ende des unteren Teils oder in das Ende des unteren Teils stoßbar ausgebildet sein.

Die Rastmittel des unteren Teils sind z.B. in dem unteren Bereich des unteren Teils angeformt; die Rastmittel befinden sich vorzugsweise an dem unteren, der zweiten Verbindungsleitung zugewandten Rand des Mantels des unteren Teils. Die Rastmittel sind vorzugsweise in Umlaufrichtung angeordnet. Gegenrastmittel, welche mit den Rastmitteln in Schließstellung zusammen zu wirken vermögen, können auf der Außenseite der zweiten, z. B. unteren, Verbindungsleitung in demjenigen Bereich ihrer Außenseite sich befinden, welche in Schließstellung den Rastmittel benachbart sind.

Die herkömmlichen Rastmittel wirken zusammen mit den herkömmlichen Gegenrastmitteln, welche an der Außenseite der unteren Verbindungsleitung angeformt sein können, um sowohl eine hinreichend lagesichere Kopplung der zweiten Verbindungsleitung mit der Rohrverbindung zu ermöglichen als auch das Entkoppeln der zweiten Verbindungsleitung von der Rohrverbindung ohne Einsatz von umfangreichem Werkzeug zu ermöglichen und ohne handwerkliches Geschick von dem Benutzer zu fordern. Die Rastmittel können konzentrisch um die Mitte-Längsachse des unteren Teils angeordnet sein.

Als Gegenrastmittel eignen sich solche, die einen Form-, Reib- und / oder Kraftschluß mit den, z.B. hakenförmigen, Rastmitteln ermöglichen, z.B. können diese als Flansch, Nut und / oder Haken ausgestaltet sein. Vorzugsweise kann das Gegenrastmittel ein an der Außenseite des oberen Endes der zweiten Verbindungsleitung, z.B. umlaufend oder unterbrochen angeordneter, sich nach außen erstreckender Flansch sein, dessen unterer Rand von den Rastnasen der Rastmitteln in Schließstellung untergriffen ist.

Das Gegenrastmittel kann ebenso eine in dem oberen Ende der zweiten Verbindungsleitung, z.B. eingefräste, Nut, von z.B. im Längsschnitt U-förmiger Gestalt, sein. Die Nut umfasst auch eine obere Nutwange und eine untere Nutwange. Die Nut kann umlaufend oder unterbrochen eingefräst bzw. ausgebildet sein. In den Nutraum, welcher von der oberen Nutwange, der unteren Nutwange und dem Nutgrund begrenzt wird, greifen oder rasten in Schließstellung die Rastnasen der Rastmittel ein. Die Rastnasen liegen in Schließstellung an der oberen Nutwange an. Ebenfalls können die Gegenrastmittel an dem oberen Ende der zweiten Verbindungsleitung mehrere angeformte Haken oder sogenannte Gegenhaken sein, welche mit den Rastmittel in Schließstellung zusammen wirken können.

Die Gegenrastmittel können ebenso gut Aussparungen, Vorsprünge, rippenförmige Erhebung/-en, Rippen und / oder Widerlager usw. sein, in welche die Rastmittel zum lösbaren Einrasten gelangen können. Die Gegenrastmittel können konzentrisch um die Mitte-Längsachse der zweiten Verbindungsleitung angeordnet sein. Ebenso kann das obere Ende der zweiten Verbindungsleitung Rastmittel aufweisen, welche an der Außenseite der unteren Verbindungsleitung so angeordnet sein können, dass diese in an dem unteren Teil angeformte Gegenrastmittel zum lösbaren Einrasten gelangen können.

Die Rastmittel sind dauerhaft elastisch bzw. dauerhaft rückformbar. Bei dem Übergang von der Offenstellung in die Schließstellung können die elastischen Rastmittel mit ihren Rastnasen über die Gegenrastmittel, z.B. über den Flansch, rutschen, so dass die Rastnasen sich an die untere, der Rohrverbindung abgewandten, Außenseite des Flansches sich anlegen können. Bei dem Übergang von der Schließstellung in die Offenstellung wird die Rohrverbindung von der zweiten Verbindungsleitung abgezogen, indem die Rastnasen aufgrund ihrer Elastizität über den Flansch rutschen können.

Bei dem Übergang von der Offenstellung in die Schließstellung können die elastischen Rastmittel mit ihren Rastnasen ebenso gut über die Außenseite des oberen Endes in den Nutraum gelangen und die Rastnasen sich an die obere Nutwange anlegen. Bei dem Übergang von der Schließstellung in die Offenstellung wird die Rohrverbindung entsprechend von der zweiten Verbindungsleitung abgezogen, indem die Rastnasen aufgrund ihrer Elastizität über die obere, der Rohrverbindung abgewandte, Nutwange in Richtung der ersten Verbinudungsleitung leicht nach außen gedehnt zu rutschen vermögen.

Die Rastmittel können ebenfalls federnd vorgespannte Klemmmittel sein, welche an dem unteren Rand des unteren Teils der Rohrverbindung vorgesehen sind; in Schließstellung sind die Klemmmittel mit dem oberen Ende der zweiten Verbindungsleitung in lösbaren Eingriff gebracht. Die Klemmmittel haben z.B. einen Haltesteg, auch Raststeg genannt, und eine sich an dem unteren Ende des Haltestegs nach innen radial erstreckende Rastnase. In Schließstellung untergreift die Rastnase die der zweiten Verbindungsleitung zugewandte Unterseite eines Vorsprungs oder dergleichen als Gegenrastmittel.

Die Seiten der Rastnasen können als Fasen ausgebildet sein, an welche die Gegenrastmittel erleichtert in einen berührenden Eingriff gelangen und welche in Richtung der Öffnung des unteren Teils geneigt sind. Vorzugsweise sind die Rastmittel Federelemente, Arretierungsbügel mit einwärts abgewinkelten Schenkeln oder dergleichen. Die Rastmittel des elastischen Typs können beispielsweise Federelemente sein.

Die Rastmittel, welche in dem unteren Bereich des unteren Teils, hier z.B. an der Nase, angeformt sind, ermöglichen die lösbare Kopplung der Rohrverbindung mit der unteren Verbindungsleitung. Aufgrund der Ausbildung der Rohrverbindung mit Rastmitteln ist die erfindungsgemäße Rohrverbindungsanordnung in einfacher Weise an die zweite Verbindungsleitung koppelbar bzw. von dieser entfernbar sowie leicht handhabbar, ohne dass es erforderlich ist, besondere Maßnahmen bez. des Arretierens zu ergreifen. Ebenso ist das Arretieren der Rohrverbindung der erfindungsgemäßen Rohrverbindungsanordnung an die zweite Verbindungsleitung dauerhaft aufgrund des Einsatzes dauerelastischer oder dauerhaft rückformbarer Rastmitteln aus z.B. Kunststoffen. Wegen der geringen Anforderung an die Kenntnisse und die Erfahrung des Benutzers bei der Kopplung der Rohrverbindung der erfindungsgemäßen Rohrverbindungsanordnung an die zweite Verbindungsleitung ist nur geringes Geschick des Benutzers für die Handhabung derselben erforderlich.

Die zweite Verbindungsleitung kann an ihrem oberen Ende an ihrer Außenseite einen umlaufend angeordneten, sich nach außen erstreckenden Flansch aufweisen, dessen unterer Rand von dem Klemmmittel in Schließstellung untergriffen ist. Ebenfalls kann man an der Außenseite der zweiten Verbindungsleitung in Umfangsrichtung angeordnete Rippen anformen. Mindestens eine Rippe, welche an der Außenseite des oberen Endes der zweiten Verbindungsleitung sich befindet, wird mit dem Rastmittel in Schließstellung in Eingriff, z.B. durch Untergriff, gelangen können. Die zweite Verbindungsleistung ist z.B. mit den Rippen einstückig, beispielsweise als Vollwandrohr, ausgebildet.

Die an der Außenseite der zweiten Verbindungsleitung angeformten Rppen erhöhen die Formstabilität der zweiten Verbindungsleitung. Die der Rohrverbindung zugewandte Rippe kann als Flansch verwendet werden, welche von den Rastmitteln in Schließstellung untergriffen werden kann statt einer in das obere Ende eingefrästen Nut.

Ebenso ist es möglich, dass der Flansch oder mindestens eine Rippe, welche der Rohrverbindung zugewandt ist, Einkerbungen aufweist, durch welche die Rastnasen der Rastmittel bei dem Aufschieben des unteren Teils über das obere Ende der zweiten Verbindungsleitung geführt sind und nach dem Aufschieben die Rohrverbindung um die Mitte-Längsachse A gedreht wird, so dass die Rastnasen den unteren Rand der Rippe in Schließstellung untergreifen können; bei dem Übergang von der Schliessstellung in die Offenstellung kann die zweite Verbindungsleitung von der Rohrverbindung durch Drehen der Rohrverbindung um die Mitte-Längsachse A und Führen der Rastnasen in den Einkerbungen in Richtung zu der ersten Verbindungsleitung hin voneinander getrennt werden.

Um ebenso diejenigen Verbindungsleitungen zu benutzen, welche lediglich außenseitig umlaufende Rippen aufweisen, kann mindestens eine dem Ende der Verbindungsleitung zugewandte Rippe, welche an der Außenseite des oberen Endes der zweiten Verbindungsleitung angeformt ist, Einkerbungen oder Auslassungen aufweisen, durch welche die Rastnasen der Rastmittel bei dem Aufschieben des unteren Teils der Rohrverbindung über das obere Ende der zweiten Verbindungsleitung geführt wird. Die Einkerbungen sind vorzugsweise längs zu der Mitte-Längsachse A der Verbindungsleitung ausgerichtet. Nach dem Aufschieben der Rohrverbindung auf das obere Ende der zweiten Verbindungsleitung wird die RohrVerbindung um die Mitte-Längsachse A der zweiten Verbindungsleitung geringfügig gedreht wird, so dass sich deren Rastnasen zwischen den Einkerbungen unter der Rippe befinden.

Aufgrund der Federvorspannung der Raststege der Rastmittel des elastischen Typs wird ein dauerhafter Kraft-, Reibschluß und / oder Formschluß der Rohrverbindung mit der zweiten Verbindungsleitung ermöglicht. Die Kopplung zwischen der Rohrverbindung und der zweiten Verbindungsleitung kann verstärkt werden, indem die Raststege in Richtung der unteren Öffnung des unteren Teils geneigt sind.

Die erfindungsgemäße Rohrverbindungsanordnung kann zur lösbaren Verbindung der Rohrverbindung mit der zweiten Verbindungsleitung verwendet werden, deren Außenseite glattwandig ist mit oder ohne eine umlaufende rippenförmige Erhebungen an dem oberen Ende derselben.

Ebenso eignet sich die erfindungsgemäße Rohrverbindungsanordnung für die zweite Verbindungsleitung, welche eine oder mehrere umlaufende Rippen, vorzugsweise parallel zueinander ausgerichtete und / oder voneinander gleich beabstandete, außenseitig angefonnt aufweist. Eine besondere Ausbildung der Rippe kann die Erhebung sein. Diese rippenförmige Erhebung kann absatzförmig oder stufenförmig umlaufend oder unterbrochen umlaufend unter Bildung von einer oder mehreren Stufen ausgebildet sein, so dass z.B. ein Teil der Unterseite der Erhebung in Schließstellung von der Rastnase untergriffen wird. Die Erhebung zeichnet sich vorteilhafterweise im Vergleich zu den Rippen durch ein größeres Ausmaß an Breite in Längsrichtung der Verbindungsleitung aus. Die Erhebung kann auch Einkerbungen aufweisen, durch welche die Rastnasen der Klemmmittel bzw. Rastmittel bei dem Aufschieben des unteren Teils der Rohrverbindung über das obere Ende der zweiten Verbindungsleitung geführt wird. Nach dem Aufschieben der Rohrverbindung auf das obere Ende der zweiten Verbindungsleitung wird die Rohrverbindung um die Mitte-Längsachse A der zweiten Verbindungsleitung geringfügig gedreht wird, so dass sich deren Rastnasen zwischen den Einkerbungen unter der Erhebung befinden.

Das obere Teil der Rohrverbindung kann auch ein umlaufendes Kragenteil umfassen. Das Kragenteil ist im wesentlichen hohlzylinderförmig. Die innenseitige Ausgestaltung des Kragenteils bzw. des oberen Teils ist entsprechend der Ausbildung des unteren Endes der ersten Verbindungsleitung angepasst. Das Kragenteil kann die erste Verbindungsleitung bzw. einen Teil derselben aufnehmen, wobei die Innenseite des Kragenteils elastisch auf der Außenseite der ersten Verbindungsleitung Fläche an Fläche anliegen kann. Das, vorzugsweise im Längsschnitt U-förmige, Kragenteil kann mindestens eine Weichdichtung, z.B. einen Dichtungsring, aufnehmen.

In dem Kragenteil kann die erste Verbindungsleitung beweglich, vorzugsweise koaxial zu der Mitte-Längsachse A der Rohrverbindung, geführt werden. Das Kragenteil nimmt mit seinen beiden benachbarten zueinander parallelen Schenkeln die Weichdichtung auf. Die Weichdichtung kann die Außenseite der ersten Verbindungsleitung von der Innenseite der oberen Teils flüssigkeitsdicht und / oder gasdicht abdichten. Hinzutretend wird durch die Führung der ersten Verbindungsleitung durch die Weichdichtung dieselbe soweit zentriert in der Rohrverbindung und die erste Verbindungsleitung in der Innenseite der Rohrverbindung soweit beabstandet, dass ebenso eine radiale, vorzugsweise federnde, Schwenkung der ersten Verbindungsleitung um ca. 0 bis 8° in der Rohrverbindung ermöglicht werden kann.

Das obere Teil der Rohrverbindung kann die erste Verbindungsleitung oder zumindest einen Teil derselben aufnehmen. Die erste Verbindungsleitung kann in der Rohrverbindung bzw. in dem oberen Teil der Rohrverbindung, vorzugsweise axial zu der Mitte-Längsachse A des zweiten Steigleitungsrohrs bzw. der Rohrverbindung, beweglich geführt sein, um Bodensetzungen auszugleichen.

Die Mitte-Längsachsen der ersten Verbindungsleitung, zweiten Verbindungsleitung, des unteren Teils und des oberen Teils können miteinander überein stimmen. Weiterhin kann die erste Verbindungsleitung koaxial zu der Mitte-Längsachse A der Rohrverbindung und / oder zu der Mitte-Längsachse A der zweiten Verbindungsleitung teleskopartig verschoben werden.

Die Rohrverbindung ist vorzugsweise einstückig. Die Rohrverbindung kann aus Metall und / oder Kunststoff hergestellt sein. Zum Beispiel werden die Enden des oberen und des unteren Teils aus herkömmlichen Kunststoffen soweit mit Hilfe herkömmlicher Verfahren stark erhitzt, dass diese Enden miteinander unter Anpressdruck innig zu einem Stück verschmelzen können. Die Rohrverbindung kann aus vorzugsweise elastischen, vorteilhafterweise dauerelastischen, Kunststoffen, glas- und / oder kohlefaserverstärkten Kunststoffen, holzartigen Werkstoffen, Metallen, wie Gusseisen, Keramiken oder dergleichen hergestellt sein. Die Rohrverbindung kann beispielsweise auch aus Kunststoffen, wie Polypropylenen, Polyethylenen, Polyvinylchloriden und / oder Mischungen derselben hergestellt sein. Die Verbindungsleitungen können aus vorzugsweise elastischen, vorteilhafterweise dauerelastischen, Kunststoffen, glas- und / oder kohlefaserverstärkten Kunststoffen, holzartigen Werkstoffen, Metallen, wie Gusseisen, Keramik oder dergleichen hergestellt sein. Die Verbindungsleitungen können beispielsweise auch aus Kunststoffen, wie Polypropylenen, Polyethylenen, Polyvinylchloriden und / oder Mischungen derselben hergestellt sein.

Die rückformbar ausgebildete Rohrverbindung kann in einer anderen erfindungsgemäßen Ausgestaltung auch einen Schlitz oder Spalt aufweisen, welcher vorzugsweise koaxial zu der Mitte-Längsachse A der Rohrverbindung der erfindungsgemäßen Rohrverbindungsanordnung ausgerichtet ist und der Länge nach von dem einen Ende des oberen Teils bis zum anderen Ende des unteren Teils der erfindungsgemäßen Rohrverbindungsanordnung unter Bildung von zwei Längsenden verläuft. In Offenstellung, z.B. im entspannten Zustand der Rohrverbindung, können in Draufsicht oder Querschnitt die durch den Spalt ausgebildeten beiden Längsenden des oberen Teils und des unteren Teils beabstandet sein. Durch Aufspreizen der Längsenden voneinander und durch deren weitere Beabstandung voneinander wird bei der erfindungsgemäßen Rohrverbindungsanordnung das obere Ende der zweiten Verbindungsleitung aufgenommen in dem von dem unteren Teil der Rohrverbindung ausgebildeten Innenraum. Aufgrund von an dem Längsende des unteren Teils und an dem des oberen Teils angeordneten herkömmlichen Spannmitteln weisen unter Aufwendung von Spannkraft die beiden Längsenden des unteren und des oberen Teils eine geringere Beabstandung auf. Die herkömmlichen Spannmittel können kraftschlüssige, lösbare mittel- oder unmittelbare Verbindungen sein. Der Kraftschluss erfolgt durch z.B. Klemmung, die beispielsweise durch Schrauben oder Schraubverbindungen, Federn, Keilwirkung, Verstiftungen oder dergleichen erzeugt werden kann. Durch das Spannen der Spannmittel wird eine plastische Verformung der Rohrverbindung der erfindungsgemäßen elastischen Rohrverbindungsanordnung unter Anlegen der Innenseiten der Rohrverbindung an die Außenseiten der Enden der Verbindungsleitungen bewirkt. Beim Lösen der Spannmittel beim Übergang von der Schließstellung in die Offenstellung oder Ruhestellung wird die plastische Verformung der erfindungsgemäßen Rohrverbindungsanordnung die Verspannung verringert oder aufgehoben und die Längsenden des unteren Teils und des oberen Teils sind weit voneinander beabstandet, so dass ohne weiteres die freien Enden der Verbindungsleitungen aus der erfindungsgemäßen Rohrverbindungsanordnung herausgenommen werden können. Ebenso werden durch radial wirkende Spannkräfte die Außenflächen der Verbindungsleitungen und Innenseiten der Rohrverbindung soweit zum Anliegen gebracht, dass Dichtringe nicht erforderlich sind. Jedoch können die Innenseiten des unteren Teils und des oberen Teils, an welchen die Enden der Verbindungsleitungen in berührendem Eingriff mit den Teilen der Rohrverbindung bringbar sind, erwünschtermaßen hinzutretend Dichtungsringe aufweisen.

An den Innenseiten beispielsweise des U-förmigen Mantels, des Stegs, der Nase, des ersten Schenkels, Mantelabschnitts, Randteils und / oder Kragenteils können auch dauerhaft elastische Weichdichtungen, wie Dichtungsringe mit / oder ohne angeformten Dichtungslaschen, Dichtungslaschen, Dichtungsmanschetten oder dergleichen, mit oder ohne seitlicher Führung angeordnet sein. Vorzugsweise sind die Dichtungsringe in Nuten, welche innenseitig in den unteren Teil und / oder oberen Teil und / oder in dem oberen Ende der zweiten Verbindungsleitung eingefräst oder als solche ausgeformt sein können, geführt.

Das hohlzylinderförmige Kragenteil des oberen Teils kann innenseitig eine Weichdichtung zur Abdichtung aufweisen.

Die erste Verbindungsleitung wird zumindest teilweise von dem oberen oberen Teil der Rohrverbindung aufgenommen, so dass die Außenseite der ersten Verbindungsleitung an der Innenseite des oberen Endes anliegt bzw. über Weichdichtungen an der Innenseite des oberen Teils anliegt. Die erste Verbindungsleitung kann ebenso, falls gewünscht, in einem weiteren Ausmaß in die Rohrverbindung eingeführt werden und zum Beispiel hinzutretend in die zweite Verbindungsleitung eingeführt werden, wenn z.B. ein geringerer Abstand zwischen dem oberen Ende der ersten Verbindungsleitung und dem oberen Ende der zweiten Verbindungsleitung erforderlich ist.

Die erfindungsgemäße Rohrverbindungsanordnung zeichnet sich unter anderem dadurch aus, dass die erste Verbindungsleitung beweglich in dem oberen Teil bzw. in der Rohrverbindung geführt werden kann, ebenso kann die erste Verbindungsleitung teleskopartig in die zweite Verbindungsleitung eingeschoben oder geführt werden. Der Mantel liegt mit seiner Innenseite an der Außenseite der zweiten Verbindungsleitung dicht in Schließstellung an. Die Dichtigkeit wird unterstützt beispielsweise durch Anordnung von Dichtringen an zwischen der ersten Verbindungsleitung und dem Mantel des oberen Teils.

Vorzugsweise weist das untere Teil den Mantel dergestalt auf, dass dieser einen Innenraum zur Aufnahme des oberen Endes des zweiten Steigleitungsrohrs, vorzugsweise seitlich, begrenzt, an der Innenseite des Mantels ein in nach innen vortretender umlaufender Steg angeformt ist, an der den Rastmitteln zugewandten Seite des Stegs der obere Rand des oberen Endes der zweiten Steigleitungsleitung zum Anliegen in Schließstellung gelangt.

Die zweite Verbindungsleitung kann an ihrem Ende, welches von dem unteren Teil der Rohrverbindung aufgenommen wird, eine umlaufende rippenförmige Erhebung aufweisen. Diese rippenförmige Erhebung wird von der U-förmigen Wand des unteren Teils in Schließstellung zum Einhaken gelangen. Die Erhebung kann auch im Längsschnitt stufenförmig ausgebildet sein. Die Erhebung liegt mit ihrer Außenseite in Schließstellung Fläche an Fläche an den Innenseiten des U-förmigen Mantels an. In der Draufsicht oder im Querschnitt sind der Steg, die Nase, Steg, Randteil, und / oder Kragenteil umlaufend oder unterbrochen umlaufend angeordnet.

Die zweite Verbindungsleitung der erfindungsgemäßen Rohrverbindungsanordnung kann an ihrem anderen Ende, welches nicht von dem unteren Teil der Rohrverbindung aufgenommen wird, an z.B. Schächte, Mannloch-Einbauteile, Schachtböden, Kanalrohre oder dergleichen gekoppelt werden. Die erste Verbindungsleitung der erfindungsgemäßen Rohrverbindungsanordnung kann mit ihrem oberen, ersten Ende an Schachtabdeckungen, an weitere Verbindungsleitungen, oder an Schachtabdeckungsrahmen usw. gekoppelt werden.

Die erfindungsgemäße Rohrverbindungsanordnung zeichnet sich durch die Verschiebbarkeit der ersten Verbindungsleitung parallel und / oder koaxial zu der Mitte-Längsachsen A der zweiten Verbindungsleitung und Anpassung derselben an verschiedenste Gegebenheiten im Untergrund aus und ermöglicht eine stufenlose Längenverschiebung der erfindungsgemäßen Rohrverbindungsanordnung, z.B. der ersten Verbindungsleitung in der Rohrverbindung und, gegebenenfalls in der zweiten Verbindungsleitung.

Durch die bestimmte Anordnung der Rohrverbindung der erfindungsgemäßen Rohrverbindungsanordnung kann eine Schließstellung und damit auch Dichtigkeit der erfindungsgemäßen Rohrverbindungsanordnung ohne spezielle Werkzeuge und ohne hohe Anforderungen an Kenntnisse und Vermögen der Benutzer ermöglicht werden. Ebenso zeichnet sich die besondere Ausgestaltung der erfindungsgemäßen Rohrverbindungsanordnung hinsichtlich des Auftretens von beispielsweise radial zu der Mitte-Längsachse gerichteten Kräften aus, ohne dass diese zu Rissen oder Spannungsrissen in der erfindungsgemäßen Rohrverbindungsanordnung führen.

Gerade durch die Anordnung von Rastmitteln im unteren Bereich des unteren Teils der erfindungsgemäßen Rohrverbindungsanordnung kann eine einfache und dennoch dauerhafte und leicht handhabbare erfindungsgemäße Rohrverbindungsanordnung bereitgestellt werden. Die im Stand der Technik erforderliche erschwerte Handhabung der Rohrverbindung bzw. der Rohrverbindungsanordnung wird durch die Verwendung von aus Kunststoffen, wie Polypropylen, PE, PVC oder dergleichen, hergestellten Verbindungsleitungen, z.B. ULTRA-RIB 2 (Fa. Uponor Anger GmbH) vermieden, so dass gerade die bereitzustellende Rohrverbindungsanordnung sich weder durch hohe Herstellungskosten noch durch hohe Wartungskosten auszeichnet. Ebenso ist der zeitliche Aufwand für die Kopplung der Verbindungsleitungen mit der Rohrverbindung der erfindungsgemäßen Rohrverbindungsanordnung und für das Entkoppeln derselben voneiander nachlässigbar gering, da lediglich die Rastmittel von den Gegenrastmitteln bei dem Übergang von der Schließstellung in die Offenstellung gelöst werden bzw. vice versa durch das Aufschieben der Rohrverbindung auf das zweite Verbindungsleitung oder Drehen derselben die Rastmittel in Gegenrastmittel einzurasten vermögen und kein besonders qualifiziertes Personal hierzu einzusetzen ist.

Ebenso ist es möglich, dass die Rastvorsprünge mit ihren Haltenasen in Schließstellung die Widerlager des oberen Endes des zweiten Steigleitungsrohrs untergreifen können.

Weiterhin ist es möglich, dass Ausrichtmittel zur lagerrichtigen Anordnung der Rohrverbindung an dem oberen Ende der zweiten Verbindungsleitung zu finden sind.

Durch diese Ausgestaltung der Rohrverbindung der erfindungsgemäßen Rohrverbindungsanordnung wird eine besonders einfache preisgünstige aber sehr dauerhaft dichtende und verbindende Ausgestaltung einer Rohrverbindungsanordnung verwirklicht.

### Ausführungsbeispiele

Die Zeichnungen zeigen aufgrund der zeichnerischen Vereinfachung in schematischer, stark vergrößerter Weise ohne Anspruch auf eine maßstabsgetreue Wiedergabe Ausführungsformen ohne Beschränkung der Erfindung auf diese in
**Fig. 1** den Längsschnitt durch die Rohrverbindung 1 der erfindungsgemäßen Rohrverbindungsanordnung für die zweite Verbindungsleitung 21 mit dem aufgenommen oberen Ende 33 der zweiten Verbindungsleitung 21 in Schließstellung,
**Fig. 2** die Draufsicht auf die Rohrverbindung 1 der erfindungsgemäßen Rohrverbindungsanordnung,
**Fig. 3** den Längsschnitt durch die Rohrverbindung mit Außenfasen für die zweite Verbindungsleitung 21 mit glattwandiger Außenseite ohne Erhebung,
**Fig. 4** die Seitenansicht auf die erfindungsgemäße Rohrverbindungsanordnung mit der in der zweiten Verbindungsleitung 21 eingeführten ersten Verbindungsleitung 20 (teilweise Längsschnitt) in der zweiten Verbindungsleitung 21 in Schließstellung
   und
**Fig. 5** erfindungsgemäße Rohrverbindungsanordnung mit der aus der zweiten Verbindungsleitung 21 herausgeführten erster Verbindungsleitung 20 in Schließstellung in

### Seitenansicht.

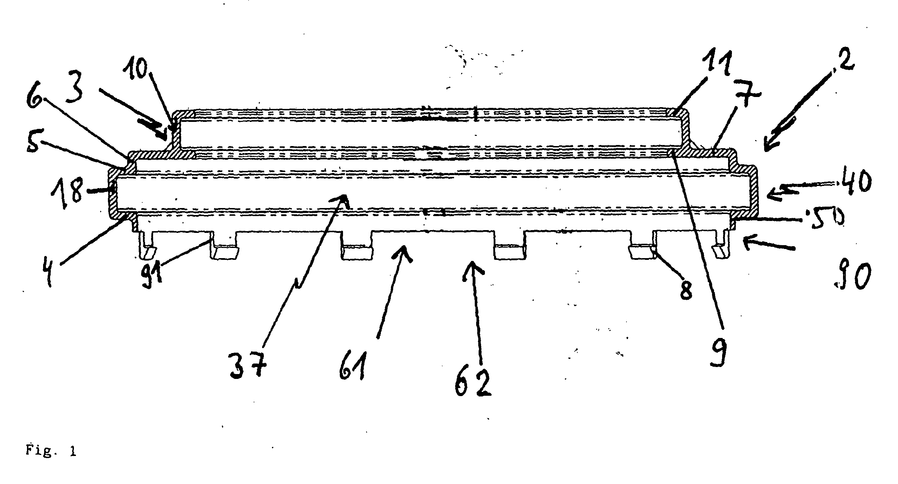

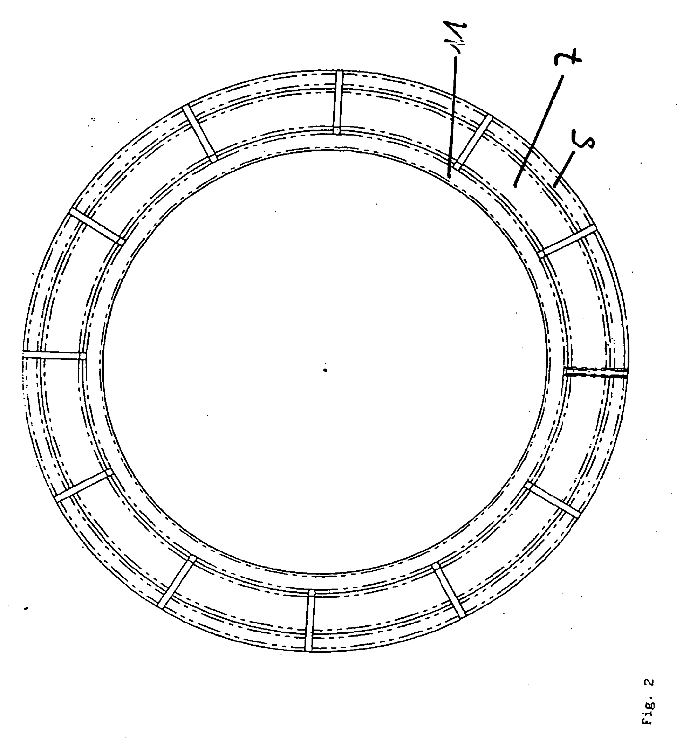

Die Rohrverbindung 1 ist hohlzylinderförmig und einstückig ausgebildet. Die Rohrverbindung 1 aus polypropylenartigem Kunststoff umfasst ein unteres hohlzylinderisches Teil 3 und ein oberes hohlzylinderisches Teil 2. Das untere Teil 2 kann im Längsschnitt im wesentlichen U-förmig ausgebildet unter Bildung eines U-förmigen Mantels 40 ausgebildet sein (Fig. 1). Der Mantel 40 hat zwei ein zu der Mitte-Längsachse der zweiten Verbindungsleitung 21 bzw. Rohrverbindung 1 koaxial ausgerichtetes Mantelteil 18 verbindende Schenkel 4, 5 auf, welche parallel zueinander ausgerichtet sind. Der untere Schenkel 4 kann in eine Nase 50 übergehen, die rechtwinklig zu dem unteren Schenkel 4 ausgerichtet ist. Die Nase 50 ist koaxial zu der Mitte-Längsachse A des unteren Teils 3 (Fig. 1, Fig. 2).

Der Mantel 40 kann die Rippe 21a, welche dem oberen Ende der zweiten Verbindungsleitung als Steigleitungsrohrs 21 zugewandt ist, aufnehmen, welche umlaufend an der Außenseite des zweiten Steigleitungsrohrs 21 angeordnet ist (Fig. 1); ebenso kann zwischen den Schenkel 4, 5 ein Dichtungsring angeordnet sein, um z.B. das obere Ende 33 der zweiten Verbindungsleitung 21 in dem unteren Teil 2 zu zentrieren und hinreichend den Innenraum von dem Außenbereich abzudichten (nicht gezeigt). Ebenfalls kann eine Dichtungslasche zwischen den Schenkel 4, 5 zum Anliegen gelangen bzw. angeordnet sein (nicht gezeigt).

In einem weiteren Ausführungsbeispiel ist in dem oberen Ende 33 der zweiten Verbindungsleitung 21 außenseitig eine Nut als Gegenrastmittel eingefräst, welche konzentrisch um die Mitte-Längsachse A der zweiten Verbindungsleitung 21 angeordnet ist (nicht gezeigt). In die Nut greifen lösbar die Rastnasen 8 der Rastmittel 90 in Schließstellung ein. Die Nut ist im Längsschnitt U-förmig; der Innenraum der Nut wird begrenzt von der oberen Nutwange, der unteren Nutwange und dem Nutgrund. Die Rastnasen 8 liegen in Schließstellung an der oberen, der ersten Verbindungsleitung zugewandten, Nutwange an. Durch das elastische Anliegen der Rastnasen 8 der elastischen Rastmittel 90 an der oberen Nutwange der in das obere Ende der zweiten Verbindungsleitung 21 eingefrästen Nut wird in Schließstellung eine hinreichende Führung der zweiten Verbindungsleitung 21 in der Rohrverbindung 1 der erfindungsgemäßen Rohrverbindungsanordnung ermöglicht.

In einem anderen Ausführungsbeispiel ist an dem oberen Ende 33 der zweiten Verbindungsleitung 21 außenseitig die Rippe 21a angeformt, welche in Umlaufrichtung angeordnet ist und durch Einkerbungen unterbrochen ist. Durch die Einkerbungen werden zumindest die Rastnasen 8 der Rastmittel 90 bei dem Aufschieben des unteren Teils 2 der Rohrverbindung 1 über das obere Ende 33 der zweiten Verbindungsleitung 21 geführt. Nach dem Aufschieben der Rohrverbindung 1 auf das obere Ende 33 der zweiten Verbindungsleitung 21 wird die Rohrverbindung 1 um die Mitte-Längsachse A der zweiten Verbindungsleitung 21 soweit gedreht wird, dass die Rastnasen 8 zwischen den Einkerbungen unter der Rippe 21a befinden.

Aufgrund der Federvorspannung der Raststege 91 wird ein dauerhafter Kraft-, Reibschluß und / oder Formschluß der Rohrverbindung 1 mit der zweiten Verbindungsleitung 21 ermöglicht.

Die erfindungsgemäße Rohrverbindungsanordnung kann zur lösbaren Verbindung der Rohrverbindung 1 mit der zweiten Verbindungsleitung 21 verwendet werden, deren Außenseite weitere Rippen 30 aufweist. Die Rippen 30 sind, um die Formstabilität der zweiten Verbindungsleitung 21 sowie die Gestaltfestigkeit und der Verwindungssteifheit der Rohrverbindung 1 zu erhöhen, an der Außenseite der zweiten Verbindungsleitung 21 und an der Außenseite der Rohrverbindung 1 parallel zueinander angeordnet sind; die Verbindungsleitungen 20, 21 mit den Rippen 30, 21 a und / oder der Erhebung sind einstückig ausgebildet. Die einstückig ausgebildete Rohrverbindung 1 kann sowohl für Verbindungsleitungen 20, 21 aus Kunststoffen, wie Polypropylen, elastischen Materialien, nicht elastischen Materialien, wie Gusseisen, Stahl, Aluminium oder Beton usw., verwendet werden, so dass die Einsetzbarkeit der erfindungsgemäßen Rohrverbindungsanordnung deutlich erhöht wird.

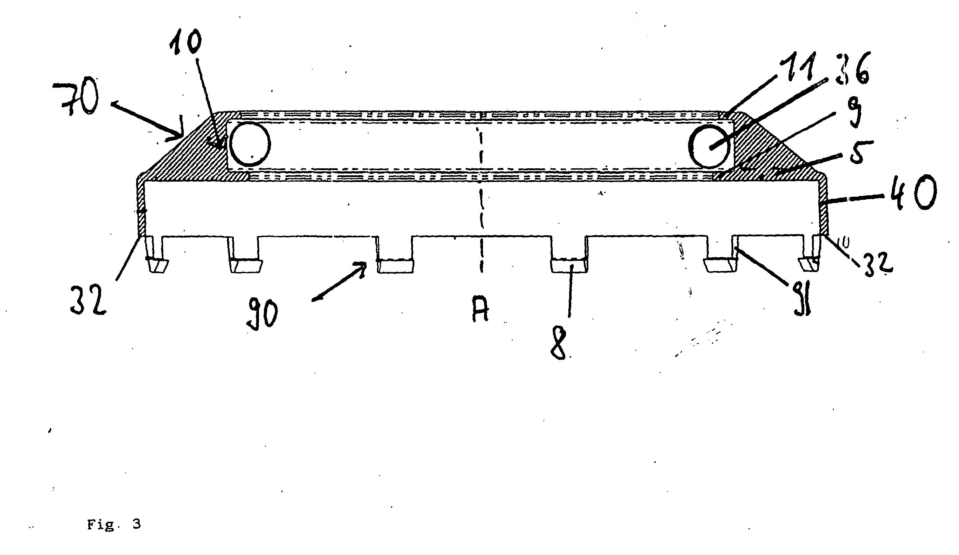

Das untere Teil 2 umfaßt in einem weiteren Ausführungsbeispiel einen Mantel 40, welcher zur Aufnahme des oberen Endes 33 der zweiten Verbindungsleitung 21 geeignet ist. Diejenigen Teile der Innenseite des Mantels 40 und der Außenseite des oberen Endes 23, welche in Schließstellung sich berühren, sind zumindest glattwandig. Die Außenseite des oberen Endes 33 liegt Fläche an Fläche an der Innenseite des Mantels 40 in Schließstellung an. Der Mantel 40 setzt sich zu einem nach innen vortretenden umlaufenden Steg 5 fort. An der den Rastmitteln 90 zugewandten Seite des Stegs liegt der obere Rand des oberen Endes 33 der zweiten Verbindungsleitung 21 in Schließstellung an (Fig. 3).

Der obere Schenkel 5, oder Steg 5 genannt, des Mantels 40 geht in einen Mantelabschnitt 6 über, welcher koaxial zu der Mitte-Längsachse A des zweiten Steigleitungsrohrs 21 und / oder des unteren Teils 2 oder oberen Teils 2 der erfindungsgemäßen Rohrverbindung ausgerichtet ist.

Der Mantelabschnitt 6 setzt sich zu einem scheibenförmigen Randteil 7 fort, welches im Längsschnitt parallel zu dem unteren Schenkel 4 des Mantels 40 bzw. im rechten Winkel zu der Mitte-Längsachse A ausgerichtet ist. Die Frontseite des Randbereichs des oberen Endes 33 des zweiten Steigleitungsrohrs 21 liegt an der Innenseite des Randteils 4 des unteren Teils 3 an. Das Randteil 7 erstreckt sich im Längsschnitt zu einem flanschartigen Vorsprung 9 in den Innenraum des unteren Teils 3 fort. Der Vorsprung 9 ist auch zumindest ein Teil des Schenkels des U-förmigen Kragenteils 10 des oberen Teils 3 der Rohrverbindung 1 (Fig. 3, Fig. 2).

Durch die Anordnung des Vorsprungs 9 wird eine geringe Beabstandung der in die Rohrverbindung 1 der erfindungsgemäßen Rohrverbindungsanordnung aufgenommenen Steigleitungsrohre 20, 21 ermöglicht, so dass bei einem möglicherweise auftretenden gewissen Bewegungsspielraum der Steigleitungsrohre 20, 21 diese nicht aneinander reiben und Oberflächenbeschädigungen vermieden werden.

Die unterseitig angeordnete umlaufende Nase 50 hat an ihrer Unterseite 32 mehrere voneinander gleichmäßig beabstandete Rastmittel 90. Die Rastmittel 90 umfassen Raststege 91 mit in den Innenraum des unteren Teils 3 radial angeordneten Rastnasen 8. Die Rastnasen 8 sind im Längsschnitt keilförmig ausgebildet mit Fasen. Da das obere Ende des zweiten Steigleitungsrohrs 21 im Längsschnitt die Rippe 21 a aufweist, liegt in Schließstellung der untere abgewinkelte Bereich der Erhebung 21a mit einem Teil ihrer Außenseite an der Innenseite der Nase 50 an. Die Unterseite der Rippe 21 a wird in Schließstellung von den Rastnasen 8 der Rastmittel 90 untergriffen und dient als Gegenrastmittel (Fig. 1).

In einem weiteren Ausführungsbeispiel umfasst das obere Teil 3 den U-förmigen Kragenteil 10. Der obere Schenkel 5, oder Steg 5 genannt, des Mantels 40 geht in den zylindrischen Kragenteil 10 über, welcher koaxial zu der Mitte-Längsachse A des zweiten Steigleitungsrohrs 21 und / oder des unteren Teils 2 der erfindungsgemäßen Rohrverbindungsanordnung ausgerichtet ist. Dieses Kragenteil 10 liegt mit seiner Innenseite bei der Aufnahme des unteren Endes der ersten Verbindungsleitung 20 an der Außenseite des ersten Leitungsrohrs 20 an (Fig. 3).

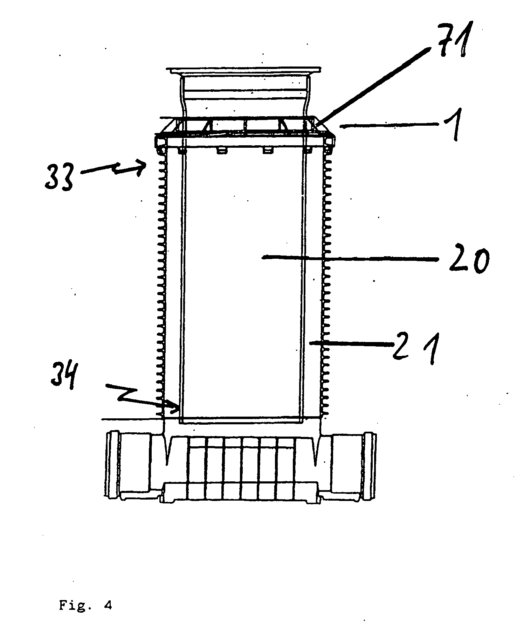

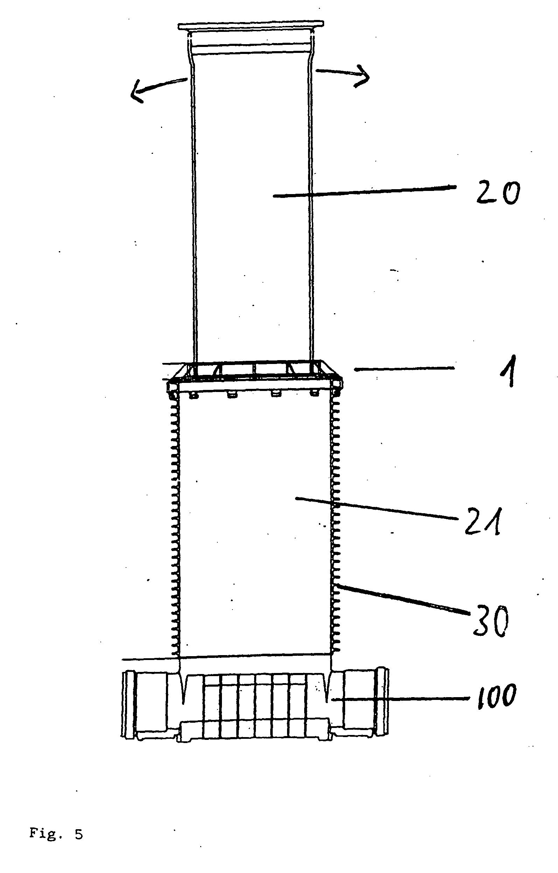

Das Kragenteil 10 nimmt mindestens einen Dichtungsring 36 auf. Der Dichtungsring 36 wird seitlich durch die beiden ein Abschnittteil verbindenden Schenkel 9, 11 des Kragenteils 10 geführt. Durch die besondere Ausbildung des Kragenteils 10 mit dem Dichtungsring 36 wird eine Beweglichkeit der ersten Verbindungsleitung 20, hier Steigleitungsrohrs, koaxial zu der Mitte-Längsachse A des zweiten Steigleitungsrohrs 21 der erfindungsgemäßen Rohrverbindungsanordnung ermöglicht, so dass das erste Steigleitungsrohr 20 stufenlos in dem zweiten Steigleitungsrohrs 21 in Längsrichtung verschiebbar ist und somit die erfindungsgemäße Rohrverbindungsanordnung sich unterschiedlichsten Gegebenheiten, wie Höhenunterschieden, anzupassen vermag. So kann die in der zweiten Verbindungsleitung 21 eingeführte erste Verbindungsleitung 20 z.B. nahezu vollständig in der zweiten Verbindungsleitung 21 in Schließstellung mit einem gewissen seitlichen Spiel eingeschoben oder hineingepaßt und auch axial und / oder etwas seitlich geschwenkt nach oben verschoben werden (Fig. 4). Ebenso kann ohne weiteres die erste Verbindungsleitung 20 aus der zweiten Verbindungsleitung 21 annähernd vollständig bis auf ihr in der Rohrverbindung 1 angeordnetes zweites Ende herausgezogen werden und kann ebenfalls ein gewisses seitliches Spiel zeigen, z.B. je nach Ausmaß der Beabstandung der Außenseite der ersten Verbindungsleitung 20 von der Innenseite der zweiten Verbindungsleitung 21 (Fig. 5).

Das erste Steigleitungsrohr 20 wird in dem oberen Teil 3 axial zu der Mitte-Längsachse A des zweiten Steigleitungsrohrs 21 bzw. der Rohrverbindung 1 beweglich geführt.

Ebenso ist eine gewisse radiale Beweglichkeit bzw. Schwenkung der ersten Verbindungsanordnung 20 um ca. 0 bis 8 ° ermöglicht (Fig. 4, siehe Pfeile Fig. 5), well die erste Verbindungsleitung z.B. durch den Dichtungsring 36 hinlänglich von der Innenseite des oberen Teils 3 und der des unteren Teils 2 beabstandet ist und zentriert wird. Der Dichtungsring 36 kann hierbei wegen seines hinreichend großen Dickendurchmessers des Ringkörpers nicht nur die derart weite Beabstandung der ersten Verbindungsleitung 20 von der Innenseite der Rohrverbindung 1 und Zentrierung der ersten Verbindungsleitung 20 in derselben sondern auch eine sogenannte radiale, federnde Schwenkbarkeit der ersten Verbindungsleitung 20 von ca. 0 bis 8 ° in der Rohrverbindung 1 ermöglichen, so dass die erste Verbindungsleitung 20 aus ihrer Schwenklage in ihre Ausgangslage unter Rückschwenken gelangen kann. Der Dichtungsring 36 dichtet die Außenseite der ersten Verbindungsleitung 20 von der Innenseite der oberen Teils 2 flüssigkeitsdicht und / oder gasdicht ab. Das Kragenteil 10 kann auch hohlzylindrisch sein und das untere mit einem Dichtungsring mit oder ohne Dichtungslasche versehene Ende 34 aufnehmen (nicht gezeigt).

Die zweite Verbindungsleitung 21 der erfindungsgemäßen Rohrverbindungsanordnung wird mit ihrem anderen Ende, welches nicht von dem unteren Teil 2 der Rohrverbindung 1 aufgenommen wird, an einen Schachtboden oder an ein Kanalrohr 100 gekoppelt.

In einem weiteren Ausführungsbeispiel können die Außenseiten des oberen Teils 3 und des unteren Teils 2 im Bereich des Mantels 40, Stegs 6, Randteils 7 und / oder Kragenteils 10 als Fasen 70 und / oder mit koaxial zu der Mitte-Längsachse A ausgerichteten Verstärkungsrippen 71 ausgebildet sein, um die Gestaltungsfestigkeit der Rohrverbindung 1 zu erhöhen.

In dem Kragenteil 10 wird die erste Verbindungsleitung 20 koaxial zu der Mitte-Längsachse A der Rohrverbindung beweglich geführt. Das Kragenteil 10 kann ebenso hohlzylinderförmig sein (nicht gezeigt). Die Außenseite der ersten Verbindungsleitung 20 ist glattwandig ausgebildet (Fig. 4, Fig. 5), so dass die erste Verbindungsleitung 20 mit ihrem unteren Ende 34 auch unter Umständen durch die Rohrverbindung 1 weit in die zweite Verbindungsleitung 21 eingeführt zu werden vermag.

Es zeigt sich, dass die erfindungsgemäße Rohrverbindungsanordnung nicht nur leicht handhabbar ist, sondern auch eine hinreichende Dichtigkeit der Verbindungsleitungen ermöglicht, ebenso die stufenlose Längsverschiebung der zu verbindenden Verbindungsleitungen 20, 21 ermöglicht. Hinzukommend gewährleistet die erfindungsgemäße Rohrverbindungsanordnung die Kopplung von Verbindungsleitungen 20, 21 unterschiedlichster Ausgestaltungen.

## Patentansprüche

1. Rohrverbindungsanordnung zur lösbaren Verbindung einer ersten Verbindungsleitung
(20) mit einer zweiten Verbindungsleitung (21) zum Verbau in Erdreich, umfassend eine Rohrverbindung (1) mit zwei hohlkörperförmigen Teilen (2, 3), eine erste Verbindungsleitung (20) und eine zweite Verbindungsleitung (21), wobei das untere Teil (2) sich an das obere Teil (3) anschließt, das untere Teil (2) zur Aufnahme eines oberen Endes (33) der zweiten Verbindungsleitung
(21) geeignet ist und das obere Teil (3) zur Aufnahme des zweiten Endes (34) der ersten Verbindungsleitung (20) geeignet ist, und das obere Ende (33) der zweiten Verbindungsleitung (21) in Schließstellung mit dem unteren Teil (2) in Eingriff gelangt
und
die Rohrverbindung (1) Rastmittel (90) mit Rastnasen (8) aufweist,
die Rastmittel (90) elastisch ausgebildet sind,
ein Mantel (40) einen Innenraum (37) zur Aufnahme des oberen Endes (33) der zweiten Verbindungsleitung (21) begrenzt, und wobei
die Rastmittel (90) Raststege (91) aufweisen und an dem unteren Ende der Raststege (91) nach innen sich erstreckende Rastnasen (8) umfassen,
die Rohrverbindung (1) einstückig ausgebildet ist und wobei
an der Außenseite der zweiten Verbindungsleitung (21) in Umfangsrichtung angeordnete Rippen (21 a, 30) angeformt sind,
**dadurch gekennzeichnet, dass**
an dem unteren Teil (2) mehrere Rastmittel (90) zum lösbaren Koppeln des oberen Endes
(33) der zweiten Verbindungsleitung (21) in Schließstellung angeordnet sind, welche Rastmittel (90) an dem unteren Rand des Mantels (40) des unteren Teils (2) in Umlaufrichtung angeformt sind, und dass
die Rastmittel (90) voneinander gleichmäßig beabstandet sind, und dass
die zweite Verbindungsleitung (21) an ihrem oberen Ende (33) an ihrer Außenseite ein oder mehrere Gegenrastmittel aufweist, welche Gegenrastmittel mit den Rastmitteln (90) in Schließstellung im Eingriff sind
und dass
das Gegenrastmittel eine Rippe (21 a) ist, welche Rippe (21a) an der Außenseite des oberen Endes (33) der zweiten Verbindungsleitung (21) angeformt ist, und welche Rippe (21 a) von den Rastmitteln (90) in Schließstellung untergriffen ist.

2. Rohrverbindungsanordnung zur lösbaren Verbindung einer ersten Verbindungsleitung (20) mit einer zweiten Verbindungsleitung (21) nach Anspruch 1, **dadurch gekennzeichnet, dass** das obere Ende (33) der zweiten Verbindungsleitung (21) außenseitig eine umlaufend angeordnete Nut als Gegenrastmittel aufweist, in die die Rastnasen der Rastmittel (90) in Schließstellung eingreifen.

3. Rohrverbindungsanordnung zur lösbaren Verbindung einer ersten Verbindungsleitung (20) mit einer zweiten Verbindungsleitung (21) nach Anspruch 1 oder 2, **dadurch gekennzeichnet, dass** das Gegenrastmittel ein an der Außenseite des oberen Endes (33) der zweiten Verbindungsleitung (21) sich nach außen erstreckender Flansch ist, dessen unterer Rand von den Rastnasen der Rastmitteln (90) in Schließstellung untergriffen

4. Rohrverbindungsanordnung zur lösbaren Verbindung einer ersten Verbindungsleitung (20) mit einer zweiten Verbindungsleitung (21) nach einem der Ansprüche 1 bis 3,
**dadurch gekennzeichnet, dass** die erste Verbindungsleitung (20) in der Rohrverbindung (1) oder in dem oberen Teil (3) der Rohrverbindung (1) beweglich geführt ist.

5. Rohrverbindungsanordnung zur lösbaren Verbindung einer ersten Verbindungsleitung (20) mit einer zweiten Verbindungsleitung (21) nach einem der Ansprüche 1 bis 4,
**dadurch gekennzeichnet, dass** das untere Teil (2) den Mantel (40) umfasst, wobei der Mantel (40) den Innenraum (37) seitlich begrenzt.

6. Rohrverbindungsanordnung zur lösbaren Verbindung einer ersten Verbindungsleitung (20) mit einer zweiten Verbindungsleitung (21) nach einem der Ansprüche 3 bis 5,
**dadurch gekennzeichnet, dass** der Flansch eine Rippe (21 a) ist, welche an der Außenseite des oberen Endes (33) der zweiten Verbindungsleitung (21) angeformt ist, und die von den Rastmitteln (90) in Schließstellung untergriffen ist.

7. Rohrverbindungsanordnung zur lösbaren Verbindung einer ersten Verbindungsleitung (20) mit einer zweiten Verbindungsleitung (21) nach einem der Ansprüche 1 bis 6, **dadurch gekennzeichnet, dass** der Flansch oder mindestens eine Rippe (30), welche an der Außenseite des oberen Endes (33) der zweiten Verbindungsleitung (21) angeformt ist, Einkerbungen aufweist, durch welche die Rastnasen (8) der Rastmittel bei dem Aufschieben des unteren Teils (2) über das obere Ende (33) der zweiten Verbindungsleitung (21) geführt, nach dem Aufschieben die Rohrverbindung (1) um die Mitte-Längsachse A gedreht werden und die Rastnasen (8) den unteren Rand der Rippe (30) in Schließstellung untergreifen.

8. Rohrverbindungsanordnung zur lösbaren Verbindung einer ersten Verbindungsleitung (20) mit einer zweiten Verbindungsleitung (21) nach einem der Ansprüche 1 bis 7,
**dadurch gekennzeichnet, dass** das obere Teil (3) ein hohlzylinderförmiges Kragenteil (10), welches innenseitig eine Weichdichtung (36) zur Abdichtung aufweist, umfasst.

9. Rohrverbindungsanordnung zur lösbaren Verbindung einer ersten Verbindungsleitung (20) mit einer zweiten Verbindungsleitung (21) nach einem der Ansprüche 1 bis 8,
**dadurch gekennzeichnet, dass** das im Längsschnitt U-förmige Kragenteil (10) die Weichdichtung (36), vorzugsweise einen Dichtungsring, aufnimmt.

10. Rohrverbindungsanordnung zur lösbaren Verbindung einer ersten Verbindungsleitung (20) mit einer zweiten Verbindungsleitung (21) nach einem der Ansprüche 1 bis 9,
**dadurch gekennzeichnet, dass** an der Innenseite des Mantels (40) ein in nach innen vortretender umlaufender Steg (5) angeformt ist, wobei der obere Rand des oberen Endes (33) der zweiten Verbindungsleitung (21) an der den Rastmitteln (90) zugewandten Seite des Stegs (5) zum Anliegen in Schließstellung gelangt.

11. Rohrverbindungsanordnung zur lösbaren Verbindung einer ersten Verbindungsleitung (20) mit einer zweiten Verbindungsleitung (21) nach einem der Ansprüche 1 bis 10,
**dadurch gekennzeichnet, dass** der von dem Mantel (40) und dem Steg (5) begrenzte Innenraum (37) das obere Ende (33) der zweiten Verbindungsleitung (21) mit glatter Außenseite aufnimmt.

12. Rohrverbindungsanordnung zur lösbaren Verbindung einer ersten Verbindungsleitung (20) mit einer zweiten Verbindungsleitung (21) nach einem der Ansprüche 1 bis 11,
**dadurch gekennzeichnet, dass** die Rohrverbindung (1) aus Metall und / oder Kunststoff hergestellt ist.

13. Rohrverbindungsanordnung zur lösbaren Verbindung einer ersten Verbindungsleitung (20) mit einer zweiten Verbindungsleitung (21) nach einem der Ansprüche 1 bis 12,
**dadurch gekennzeichnet, dass** die Rohrverbindung (1) aus Kunststoffen, elastischen, vorzugsweise dauerelastischen, Kunststoffen, glas- und / oder kohlefaserverstärkten Kunststoffen, holzartigen Werkstoffen, oder Metallen, wie Gusseisen, Keramik, hergestellt ist.

14. Rohrverbindungsanordnung zur lösbaren Verbindung einer ersten Verbindungsleitung (20) mit einer zweiten Verbindungsleitung (21) nach einem der Ansprüche 1 bis 13,
**dadurch gekennzeichnet, dass** die Rohrverbindung (1) aus Polypropylenen, Polyethylenen, Polyvinylchloriden und / oder Mischungen derselben hergestellt ist.

15. Rohrverbindungsanordnung zur lösbaren Verbindung einer ersten Verbindungsleitung (20) mit einer zweiten Verbindungsleitung (21) nach einem der Ansprüche 1 bis 14, **dadurch gekennzeichnet, dass** die Verbindungsleitungen (20, 21) aus Kunststoff, hergestellt sind.

16. Rohrverbindungsanordnung zur lösbaren Verbindung einer ersten Verbindungsleitung (20) mit einer zweiten Verbindungsleitung (21) nach einem der Ansprüche 1 bis 15,
**dadurch gekennzeichnet, dass** die Verbindungsleitungen (20, 21) aus Polypropylenen, Polyethylenen, Polyvinylchloriden und / oder Mischungen derselben hergestellt ist.

17. Rohrverbindungsanordnung zur lösbaren Verbindung einer ersten Verbindungsleitung (20) mit einer zweiten Verbindungsleitung (21) nach einem der Ansprüche 1 bis 16,
**dadurch gekennzeichnet, dass** die Verbindungsleitungen (20, 21) aus elastischen, vorzugsweise dauerelastischen, Kunststoffen, glas- und / oder kohlefaserverstärkten Kunststoffen, holzartigen Werkstoffen, oder Metallen, wie Gusseisen, Stahl, Aluminium, Beton oder Keramik hergestellt ist.

18. Rohrverbindungsanordnung zur lösbaren Verbindung einer ersten Verbindungsleitung (20) mit einer zweiten Verbindungsleitung (21) nach einem der Ansprüche 1 bis 17, **dadurch gekennzeichnet, dass** die Verbindungsleitungen (20, 21) teleskopartig, ineinander verschiebbar oder ziehharmonikaartig ausgebildet sind.

19. Rohrverbindungsanordnung zur lösbaren Verbindung einer ersten Verbindungsleitung (20) mit einer zweiten Verbindungsleitung (21) nach einem der Ansprüche 1 bis 18, **dadurch gekennzeichnet, dass** die zweite Verbindungsleistung mit den Rippen einstückig und / oder als Vollwandrohr ausgebildet ist.

20. Rohrverbindungsanordnung zur lösbaren Verbindung einer ersten Verbindungsleitung (20) mit einer zweiten Verbindungsleitung (21) nach einem der Ansprüche 1 bis 19, **dadurch gekennzeichnet, dass** der im Längsschnitt U-förmige Mantel (40) zwei ein, vorzugsweise zu der Mitte-Längsachse der zweiten Verbindungsleitung bzw. Rohrverbindung koaxial ausgerichtetes, Mantelteil (18) verbindende Schenkel (4, 5) aufweist, welche vorzugsweise parallel zueinander ausgerichtet sind.

21. Rohrverbindungsanordnung zur lösbaren Verbindung einer ersten Verbindungsleitung (20) mit einer zweiten Verbindungsleitung (21) nach einem der Ansprüche 1 bis 20, **dadurch gekennzeichnet, dass** an den Innenseiten beispielsweise des U-förmigen Mantels (40), des Stegs (5), der Nase, eines ersten Schenkels, Mantelabschnitts, Randteils und / oder Kragenteils elastische Weichdichtungen, vorzugsweise Dichtungsringe mit / oder ohne angeformten Dichtungslaschen, Dichtungslaschen, Dichtungsmanschetten, mit oder ohne seitlicher Führung angeordnet ist.

22. Rohrverbindungsanordnung zur lösbaren Verbindung einer ersten Verbindungsleitung (20) mit einer zweiten Verbindungsleitung (21) nach einem der Ansprüche 1 bis 21, **dadurch gekennzeichnet, dass** aufgrund einer Federvorspannung der Raststege der Rastmittel des elastischen Typs ein dauerhafter Kraft-, Reib- und / oder Formschluss der Rohrverbindung mit der zweiten Verbindungsleitung ermöglicht wird.

23. Rohrverbindungsanordnung zur lösbaren Verbindung einer ersten Verbindungsleitung (20) mit einer zweiten Verbindungsleitung (21) nach einem der Ansprüche 1 bis 22, **dadurch gekennzeichnet, dass** die Raststege in Richtung der unteren Öffnung des unteren Teils geneigt sind.

24. Rohrverbindungsanordnung zur lösbaren Verbindung einer ersten Verbindungsleitung (20) mit einer zweiten Verbindungsleitung (21) nach einem der Ansprüche 1 bis 23, **dadurch gekennzeichnet, dass** die Außenseite der zweiten Verbindungsleitung glattwandig ist mit oder ohne eine umlaufende rippenförmige Erhebung an dem oberen Ende derselben.

25. Rohrverbindungsanordnung zur lösbaren Verbindung einer ersten Verbindungsleitung (20) mit einer zweiten Verbindungsleitung (21) nach einem der Ansprüche 1 bis 24,
**dadurch gekennzeichnet, dass** die Rippe als rippenförmige Erhebung absatzförmig oder stufenförmig umlaufend oder unterbrochen umlaufend unter Bildung von einer oder mehreren Stufen ausgebildet ist und ein Teil der Unterseite der Erhebung in Schließstellung von der Rastnase untergriffen wird.

26. Rohrverbindungsanordnung zur lösbaren Verbindung einer ersten Verbindungsleitung (20) mit einer zweiten Verbindungsleitung (21) nach einem der Ansprüche 1 bis 25,
**dadurch gekennzeichnet, dass** das Kragenteil mit seinen beiden benachbarten zueinander parallelen Schenkeln die Weichdichtung aufnimmt, wobei die Weichdichtung die Außenseite der ersten Verbindungsleitung von der Innenseite der oberen Teils flüssigkeitsdicht und / oder gasdicht abdichtet.

27. Rohrverbindungsanordnung zur lösbaren Verbindung einer ersten Verbindungsleitung (20) mit einer zweiten Verbindungsleitung (21) nach einem der Ansprüche 1 bis 26,
**dadurch gekennzeichnet, dass** die erste Verbindungsleitung mit ihrem oberen, ersten Ende an Schachtabdeckungen, an weitere Verbindungsleitungen oder an Schachtabdeckungsrahmen gekoppelt ist.

28. Rohrverbindungsanordnung zur lösbaren Verbindung einer ersten Verbindungsleitung (20) mit einer zweiten Verbindungsleitung (21) nach einem der Ansprüche 1 bis 27,
**dadurch gekennzeichnet, dass** die zweite Verbindungsleitung an ihrem anderen Ende, welches nicht von dem unteren Teil der Rohrverbindung aufgenommen wird, an Schächten, Mannloch-Einbauteilen, Schachtböden oder Kanalrohren gekoppelt ist.

29. Rohrverbindungsanordnung zur lösbaren Verbindung einer ersten Verbindungsleitung (20) mit einer zweiten Verbindungsleitung (21) nach einem der Ansprüche 1 bis 28,
**dadurch gekennzeichnet, dass** die Mitte-Längsachsen der ersten Verbindungsleitung, zweiten Verbindungsleitung, des unteren Teils und des oberen Teils miteinander überein stimmen.

30. Rohrverbindungsanordnung zur lösbaren Verbindung einer ersten Verbindungsleitung (20) mit einer zweiten Verbindungsleitung (21) nach einem der Ansprüche 1 bis 29,
**dadurch gekennzeichnet, dass** die erste Verbindungsleitung koaxial zu der Mitte-Längsachse A der Rohrverbindung und / oder zu der Mitte-Längsachse A der zweiten Verbindungsleitung teleskopartig verschoben wird.

31. Rohrverbindungsanordnung zur lösbaren Verbindung einer ersten Verbindungsleitung (20) mit einer zweiten Verbindungsleitung (21) nach einem der Ansprüche 1 bis 30, **dadurch gekennzeichnet, dass** die Rastmittel Federelemente oder Arretierungsbügel mit einwärts abgewinkelten Schenkeln sind.

32. Rohrverbindungsanordnung zur lösbaren Verbindung einer ersten Verbindungsleitung (20) mit einer zweiten Verbindungsleitung (21) nach einem der Ansprüche 1 bis 31,
**dadurch gekennzeichnet, dass** in der Draufsicht der Steg, die Nase, Randteil, und / oder Kragenteil umlaufend oder unterbrochen umlaufend angeordnet sind.

33. Rohrverbindungsanordnung zur lösbaren Verbindung einer ersten Verbindungsleitung (20) mit einer zweiten Verbindungsleitung (21) nach einem der Ansprüche 1 bis 32,
**dadurch gekennzeichnet, dass** die Rastmittel (90) konzentrisch um die Mitte-Längsachse A des unteren Teils (2), die Gegenrastmittel konzentrisch um die Mitte-Längsachse A der zweiten Verbindungsleitung (21) angeordnet sind und / oder die erste Verbindungsleitung (20) parallel und / oder koaxial zu der Mitte-Längsachse A der zweiten Verbindungsleitung (21) verschiebbar ist.

## Claims

1. Pipe connecting assembly for detachably connecting a first connecting tube (20) to a second connecting tube (21) for installation in the ground, comprising
a pipe connection (1) having two parts (2, 3) in the form of hollow bodies, a first connecting tube (20) and a second connecting tube (21), with the lower part (2) joining the upper part (3),
the lower part (2) being suitable for receiving an upper end (33) of the second connecting tube (21) and the upper part (3) being suitable for receiving the second end (34) of the first connecting tube (20) and the upper end (33) of the second connecting tube (21) coming into engagement with the lower part (2) in the closing position, and
the pipe connection (1) having latching means (90) with latching noses (8),
the latching means (90) being elastically formed,
a casing (40) limiting an inner chamber (37) for receiving the upper end (33) of the second connecting tube (21), and with
the latching means (90) having latching webs (91) and comprising inwardly extending latching noses (8) at the lower end of the latching webs (91),
the pipe connection (1) being integrally formed, and with
ribs (21a, 30) disposed in the circumferential direction being integrally moulded onto the outside of the second connecting tube (21),
**characterised in that**
several latching means (90) for detachably coupling the upper end (33) of the second connecting tube (21) are disposed on the lower part (2) in the closing position, which latching means (90) are integrally moulded with the lower edge of the casing (40) of the lower part (2) in the circumferential direction, and **in that**
the latching means (90) are equidistantly spaced from each other, and **in that**
the second connecting tube (21) has at its upper end (33) on its outside one or more latching counter means, which latching counter means engage with the latching means (90) in the closing position,
and **in that**
the latching counter means is a rib (21a), which rib (21a) is integrally moulded onto the outside of the upper end (33) of the second connecting tube (21) and which rib (21a) is engaged from underneath by the latching means (90) in the closing position.

2. Pipe connecting assembly for detachably connecting a first connecting tube (20) to a second connecting tube (21) as claimed in Claim 1, **characterised in that** the upper end (33) of the second connecting tube (21) has on the outside a circumferentially disposed groove as latching counter means, into which groove the latching noses of the latching means (90) engage in the closing position.

3. Pipe connecting assembly for detachably connecting a first connecting tube (20) to a second connecting tube (21) as claimed in Claim 1 or 2, **characterised in that** the latching counter means take the form of an outwardly extending flange on the outside of the upper end (33) of the second connecting tube (21), the lower edge of which is engaged from underneath by the latching noses of the latching means (90) in the closing position.

4. Pipe connecting assembly for detachably connecting a first connecting tube (20) to a second connecting tube (21) as claimed in any one of Claims 1 to 3, **characterised in that** the first connecting tube (20) is movably guided in the pipe connection (1) or in the upper part (3) of the pipe connection (1).

5. Pipe connecting assembly for detachably connecting a first connecting tube (20) to a second connecting tube (21) as claimed in any one of Claims 1 to 4, **characterised in that** the lower part (2) comprises the casing (40), with the casing (40) limiting the inner chamber (37) laterally.

6. Pipe connecting assembly for detachably connecting a first connecting tube (20) to a second connecting tube (21) as claimed in any one of Claims 3 to 5, **characterised in that** the flange is a rib (21a) which is integrally moulded onto the outside of the upper end (33) of the second connecting tube (21) and which is engaged from underneath by the latching means (90) in the closing position.

7. Pipe connecting assembly for detachably connecting a first connecting tube (20) to a second connecting tube (21) as claimed in any one of Claims 1 to 6, **characterised in that** the flange or at least one rib (30) which is integrally moulded onto the outside of the upper end (33) of the second connecting tube (21) has notches, through which the latching noses (8) of the latching means are guided during sliding on of the lower part (2) over the upper end (33) of the second connecting tube (21), upon sliding on the pipe connection (1) is rotated about the longitudinal central axis A and the latching noses (8) engage the lower edge of the rib (30) from underneath in the closing position.

8. Pipe connecting assembly for detachably connecting a first connecting tube (20) to a second connecting tube (21) as claimed in any one of Claims 1 to 7, **characterised in that** the upper part (3) comprises a collar part (10) in the form of a hollow cylinder which has a soft seal (36) on the inside for sealing purposes.

9. Pipe connecting assembly for detachably connecting a first connecting tube (20) to a second connecting tube (21) as claimed in any one of Claims 1 to 8, **characterised in that** the collar part (10) being U-shaped in longitudinal section receives the soft seal (36), preferably a sealing ring.

10. Pipe connecting assembly for detachably connecting a first connecting tube (20) to a second connecting tube (21) as claimed in any one of Claims 1 to 9, **characterised in that** an inwardly protruding circumferential web (5) is integrally moulded onto the inside of the casing (40), with the upper edge of the upper end (33) of the second connecting tube (21) on the side of the web (5) facing the latching means (90) coming to rest in the closing position.

11. Pipe connecting assembly for detachably connecting a first connecting tube (20) to a second connecting tube (21) as claimed in any one of Claims 1 to 10, **characterised in that** the inner chamber (37) limited by the casing (40) and the web (5) receives the upper end (33) of the second connecting tube (21) with a smooth outside.

12. Pipe connecting assembly for detachably connecting a first connecting tube (20) to a second connecting tube (21) as claimed in any one of Claims 1 to 11, **characterised in that** the pipe connection (1) is manufactured from metal and/or plastic.

13. Pipe connecting assembly for detachably connecting a first connecting tube (20) to a second connecting tube (21) as claimed in any one of Claims 1 to 12, **characterised in that** the pipe connection (1) is manufactured from plastics, elastic, preferably permanently elastic, plastics, glass and/or carbon fibre reinforced plastics, woody materials, or metals such as cast iron, or ceramic.

14. Pipe connecting assembly for detachably connecting a first connecting tube (20) to a second connecting tube (21) as claimed in any one of Claims 1 to 13, **characterised in that** the pipe connection (1) is manufactured from polypropylenes, polyethylenes, polyvinyl chlorides and/or mixtures thereof.

15. Pipe connecting assembly for detachably connecting a first connecting tube (20) to a second connecting tube (21) as claimed in any one of Claims 1 to 14, **characterised in that** the connecting tubes (20, 21) are manufactured from plastic.

16. Pipe connecting assembly for detachably connecting a first connecting tube (20) to a second connecting tube (21) as claimed in any one of Claims 1 to 15, **characterised in that** the connecting tubes (20, 21) are manufactured from polypropylenes, polyethylenes, polyvinyl chlorides and/or mixtures thereof.

17. Pipe connecting assembly for detachably connecting a first connecting tube (20) to a second connecting tube (21) as claimed in any one of Claims 1 to 16, **characterised in that** the connecting tubes (20, 21) are manufactured from elastic, preferably permanently elastic, plastics, glass and/or carbon fibre reinforced plastics, woody materials, or metals such as cast iron, steel and aluminium, concrete or ceramic.

18. Pipe connecting assembly for detachably connecting a first connecting tube (20) to a second connecting tube (21) as claimed in any one of Claims 1 to 17, **characterised in that** the connecting tubes (20, 21) are configured in the form of a telescope, so that they can be pushed into each other, or in the form of a concertina.

19. Pipe connecting assembly for detachably connecting a first connecting tube (20) to a second connecting tube (21) as claimed in any one of Claims 1 to 18, **characterised in that** the second connecting tube is configured integrally with the ribs and/or as a solid wall pipe.

20. Pipe connecting assembly for detachably connecting a first connecting tube (20) to a second connecting tube (21) as claimed in any one of Claims 1 to 19, **characterised in that** the casing (40) being U-shaped in longitudinal section has two legs (4, 5) connecting a casing part (18) which is preferably oriented coaxially to the longitudinal central axis of the second connecting tube or pipe connection, said legs preferably being oriented parallel to each other.

21. Pipe connecting assembly for detachably connecting a first connecting tube (20) to a second connecting tube (21) as claimed in any one of Claims 1 to 20, **characterised in that** elastic soft seals, preferably sealing rings with or without integral sealing tongues, sealing sleeves, with or without lateral guiding, are disposed on the insides, for example of the U-shaped casing (40), the web (5), the nose, a first leg, casing section, edge part and/or collar part.

22. Pipe connecting assembly for detachably connecting a first connecting tube (20) to a second connecting tube (21) as claimed in any one of Claims 1 to 21, **characterised in that** a permanent non-positive, friction and/or positive fit of the pipe connection with the second connecting tube is made possible due to a spring bias of the latching webs of the elastic type of latching means.

23. Pipe connecting assembly for detachably connecting a first connecting tube (20) to a second connecting tube (21) as claimed in any one of Claims 1 to 22, **characterised in that** the latching webs are inclined in the direction of the lower opening of the lower part.

24. Pipe connecting assembly for detachably connecting a first connecting tube (20) to a second connecting tube (21) as claimed in any one of Claims 1 to 23, **characterised in that** the outside of the second connecting tube has smooth walls with or without a circumferential elevation in the form of ribs at the upper end of the same.

25. Pipe connecting assembly for detachably connecting a first connecting tube (20) to a second connecting tube (21) as claimed in any one of Claims 1 to 24, **characterised in that** the rib is configured as a rib-shaped elevation in the form of shoulders or steps circumferentially or intermittently circumferentially, forming one or more steps, and a part of the underside of the elevation is engaged from underneath by the latching nose in the closing position.

26. Pipe connecting assembly for detachably connecting a first connecting tube (20) to a second connecting tube (21) as claimed in any one of Claims 1 to 25, **characterised in that** the collar part with its two adjoining legs which run parallel to each other receives the soft seal, with the soft seal sealing the outside of the first connecting tube from the inside of the upper part, so that it is impervious to liquids and/or gas-tight.

27. Pipe connecting assembly for detachably connecting a first connecting tube (20) to a second connecting tube (21) as claimed in any one of Claims 1 to 26, **characterised in that** the first connecting tube is coupled with its upper first end to shaft covers, to further connecting tubes or to shaft cover frames.

28. Pipe connecting assembly for detachably connecting a first connecting tube (20) to a second connecting tube (21) as claimed in any one of Claims 1 to 27, **characterised in that** the second connecting tube is coupled at its other end, which is not received by the lower part of the pipe connection, to shafts, manhole fixtures, shaft bottoms or sewer pipes.

29. Pipe connecting assembly for detachably connecting a first connecting tube (20) to a second connecting tube (21) as claimed in any one of Claims 1 to 28, **characterised in that** the central longitudinal axes of the first connecting tube, second connecting tube, the lower part and the upper part correspond to each other.

30. Pipe connecting assembly for detachably connecting a first connecting tube (20) to a second connecting tube (21) as claimed in any one of Claims 1 to 29, **characterised in that** the first connecting tube is displaced coaxially to the longitudinal central axis A of the pipe connection and/or to the longitudinal central axis A of the second connecting tube in the form of a telescope.

31. Pipe connecting assembly for detachably connecting a first connecting tube (20) to a second connecting tube (21) as claimed in any one of Claims 1 to 30, **characterised in that** the latching means are spring elements or locking stirrups with inwardly bent legs.

32. Pipe connecting assembly for detachably connecting a first connecting tube (20) to a second connecting tube (21) as claimed in any one of Claims 1 to 31, **characterised in that** in a plan view the web, the nose, edge part and/or collar part are disposed circumferentially or intermittently circumferentially.

33. Pipe connecting assembly for detachably connecting a first connecting tube (20) to a second connecting tube (21) as claimed in any one of Claims 1 to 32, **characterised in that** the latching means (90) are disposed concentrically about the longitudinal central axis A of the lower part (2), the latching counter means are disposed concentrically about the longitudinal central axis A of the second connecting tube (21) and/or the first connecting tube (20) can be displaced parallel and/or coaxially to the longitudinal central axis A of the second connecting tube (21).

## Revendications

1. Agencement de raccordement de tuyau pour le raccordement détachable d'une première conduite de raccordement (20) à une seconde conduite de raccordement (21) pour le coffrage enterré, comprenant un raccordement de tuyau (1) avec deux parties formant cavité (2, 3), une première conduite de raccordement (20) et une seconde conduite de raccordement (21), la partie inférieure (2) se raccordant à la partie supérieure (3), la partie inférieure (2) est adaptée pour recevoir une extrémité supérieure (33) de la seconde conduite de raccordement (21) et la partie supérieure (3) est adaptée pour recevoir la seconde extrémité (34) de la première conduite de raccordement (20), et l'extrémité supérieure (33) de la seconde conduite de raccordement (21) vient en prise en position de fermeture avec la partie inférieure (2), et le raccordement de tuyau (1) présente des moyens d'encliquetage (90) avec des embouts d'encliquetage (8), les moyens d'encliquetage (90) sont élastiques, une enveloppe (40) délimite un espace intérieur (37) pour recevoir l'extrémité supérieure (33) de la seconde conduite de raccordement (21), et dans lequel les moyens d'encliquetage (90) présentent des traverses d'encliquetage (91) et comprennent sur l'extrémité inférieure des traverses d'encliquetage (91) des embouts d'encliquetage (8) s'étendant vers l'intérieur, le raccordement de tuyau (1) étant monobloc et dans lequel des nervures (21a, 30) placées en direction périphérique sont formées sur le côté extérieur de la seconde conduite de raccordement (21),
**caractérisé en ce que** plusieurs moyens d'encliquetage (90) pour le découplage détachable de l'extrémité supérieure (33) de la seconde conduite de raccordement (21) sont placés en position de fermeture sur la partie inférieure (2), lesquels moyens d'encliquetage (90) sont formés sur le bord inférieur de l'enveloppe (40) de la partie inférieure (2) en direction périphérique, et **en ce que** les moyens d'encliquetage (90) sont espacés régulièrement les uns des autres, et **en ce que** la seconde conduite de raccordement (21) présente sur son extrémité supérieure (33) sur son côté extérieur un ou plusieurs moyens de contre-encliquetage, lesquels moyens de contre-encliquetage sont en prise en position de fermeture avec les moyens d'encliquetage (90), et **en ce que** le moyen de contre-encliquetage est une nervure (21a), laquelle nervure (21a) est formée sur le côté extérieur de l'extrémité supérieure (33) de la seconde conduite de raccordement (21) et laquelle nervure (21a), est mise en prise en position de fermeture par les moyens d'encliquetage (90).

2. Agencement de raccordement de tuyau pour le raccordement détachable d'une première conduite de raccordement (20) à une seconde conduite de raccordement (21) selon la revendication 1, **caractérisé en ce que** l'extrémité supérieure (33) de la seconde conduite de raccordement (21) présente sur le côté extérieur une gorge périphérique comme moyen de contre-encliquetage, dans laquelle les embouts d'encliquetage des moyens d'encliquetage (90) viennent en prise en position de fermeture.

3. Agencement de raccordement de tuyau pour le raccordement détachable d'une première conduite de raccordement (20) à une seconde conduite de raccordement (21) selon la revendication 1 ou 2, **caractérisé en ce que** le moyen de contre-encliquetage est une bride s'étendant vers l'extérieur sur le côté extérieur de l'extrémité supérieure (33) de la seconde conduite de raccordement (21), dont le bord inférieur est mis en prise en position de fermeture par les embouts d'encliquetage des moyens d'encliquetage (90).

4. Agencement de raccordement de tuyau pour le raccordement détachable d'une première conduite de raccordement (20) à une seconde conduite de raccordement (21) selon l'une quelconque des revendications 1 à 3, **caractérisé en ce que** la première conduite de raccordement (20) est dirigée de manière mobile dans le raccordement de tuyau (1) ou dans la partie supérieure (3) du raccordement de tuyau (1).

5. Agencement de raccordement de tuyau pour le raccordement détachable d'une première conduite de raccordement (20) à une seconde conduite de raccordement (21) selon l'une quelconque des revendications 1 à 4, **caractérisé en ce que** la partie inférieure (2) comprend l'enveloppe (40), l'enveloppe (40) délimitant latéralement l'espace intérieur (37).

6. Agencement de raccordement de tuyau pour le raccordement détachable d'une première conduite de raccordement (20) à une seconde conduite de raccordement (21) selon l'une quelconque des revendications 3 à 5, **caractérisé en ce que** la bride est une nervure (21a), laquelle est formée sur le côté extérieur de l'extrémité supérieure (33) de la seconde conduite de raccordement (21) et est mise en prise en position de fermeture par les moyens d'encliquetage (90).

7. Agencement de raccordement de tuyau pour le raccordement détachable d'une première conduite de raccordement (20) à une seconde conduite de raccordement (21) selon l'une quelconque des revendications 1 à 6, **caractérisé en ce que** la bride ou au moins une nervure (30), laquelle est formée sur le côté extérieur de l'extrémité supérieure (33) de la seconde conduite de raccordement (21), présente des rainures à travers lesquelles les embouts d'encliquetage (8) des moyens d'encliquetage sont guidés lorsque la partie inférieure (2) est poussée sur l'extrémité supérieure (33) de la seconde conduite de raccordement (21), sont tournés autour de l'axe longitudinal central A après que le raccordement de tuyau
(1) a été poussé et les embouts d'encliquetage (8) mettent en prise en position de fermeture le bord inférieur de la nervure (30).

8. Agencement de raccordement de tuyau pour le raccordement détachable d'une première conduite de raccordement (20) à une seconde conduite de raccordement (21) selon l'une quelconque des revendications 1 à 7, **caractérisé en ce que** la partie supérieure (3) comprend une pièce de collet formant un cylindre creux (10), qui présente sur le côté intérieur un joint souple (36) pour l'étanchéité.

9. Agencement de raccordement de tuyau pour le raccordement détachable d'une première conduite de raccordement (20) à une seconde conduite de raccordement (21) selon l'une quelconque des revendications 1 à 8, **caractérisé en ce que** la pièce de collet de section longitudinale en forme de U (10) reçoit le joint souple (36), de préférence un anneau d'étanchéité.

10. Agencement de raccordement de tuyau pour le raccordement détachable d'une première conduite de raccordement (20) à une seconde conduite de raccordement (21) selon l'une quelconque des revendications 1 à 9, **caractérisé en ce que** sur le côté intérieur de l'enveloppe (40), une traverse (5) périphérique et faisant saillie vers l'intérieur est formée, le bord supérieur de l'extrémité supérieure (33) de la seconde conduite de raccordement (21) arrive sur le côté de la traverse (5) tourné vers les moyens d'encliquetage (90) pour se positionner en position de fermeture.

11. Agencement de raccordement de tuyau pour le raccordement détachable d'une première conduite de raccordement (20) à une seconde conduite de raccordement (21) selon l'une quelconque des revendications 1 à 10, **caractérisé en ce que** l'espace intérieur (37) délimité par l'enveloppe (40) et la traverse (5) reçoit l'extrémité supérieure (33) de la seconde conduite de raccordement (21) avec un côté extérieur lisse.

12. Agencement de raccordement de tuyau pour le raccordement détachable d'une première conduite de raccordement (20) à une seconde conduite de raccordement (21) selon l'une quelconque des revendications 1 à 11,
**caractérisé en ce que** le raccordement de tuyau (1) est fabriqué en métal et/ou en plastique.

13. Agencement de raccordement de tuyau pour le raccordement détachable d'une première conduite de raccordement (20) à une seconde conduite de raccordement (21) selon l'une quelconque des revendications 1 à 12, **caractérisé en ce que** le raccordement de tuyau (1) est fabriqué dans des plastiques, des plastiques élastiques, de préférence élastiques à longue durée, des plastiques renforcés en fibres de verre et/ou de carbone, des matériaux similaires au bois ou des métaux, comme de la fonte, de la céramique.

14. Agencement de raccordement de tuyau pour le raccordement détachable d'une première conduite de raccordement (20) à une seconde conduite de raccordement (21) selon l'une quelconque des revendications 1 à 13, **caractérisé en ce que** le raccordement de tuyau (1) est fabriqué en polypropylène, polyéthylène, chlorure de polyvinyle et/ou des mélanges de ceux-ci.

15. Agencement de raccordement de tuyau pour le raccordement détachable d'une première conduite de raccordement (20) à une seconde conduite de raccordement (21) selon l'une quelconque des revendications 1 à 14,
**caractérisé en ce que** les conduites de raccordement (20, 21) sont fabriquées en plastique.

16. Agencement de raccordement de tuyau pour le raccordement détachable d'une première conduite de raccordement (20) à une seconde conduite de raccordement (21) selon l'une quelconque des revendications 1 à 15, **caractérisé en ce que** les conduites de raccordement (20, 21) sont fabriquées en polypropylène, polyéthylène, chlorure de polyvinyle et/ou des mélanges de ceux-ci.

17. Agencement de raccordement de tuyau pour le raccordement détachable d'une première conduite de raccordement (20) à une seconde conduite de raccordement (21) selon l'une quelconque des revendications 1 à 16, **caractérisé en ce que** les conduites de raccordement (20, 21) sont fabriquées dans des plastiques élastiques, de préférence élastiques à longue durée, des plastiques renforcés en fibres de verre et/ou de carbone, des matériaux similaires au bois ou des métaux, comme de la fonte, de l'acier, de l'aluminium, du béton ou de la céramique.

18. Agencement de raccordement de tuyau pour le raccordement détachable d'une première conduite de raccordement (20) à une seconde conduite de raccordement (21) selon l'une quelconque des revendications 1 à 17, **caractérisé en ce que** les conduites de raccordement (20, 21) sont formées de manière télescopique, escamotables l'une dans l'autre ou en accordéon.

19. Agencement de raccordement de tuyau pour le raccordement détachable d'une première conduite de raccordement (20) à une seconde conduite de raccordement (21) selon l'une quelconque des revendications 1 à 18, **caractérisé en ce que** la seconde conduite de raccordement est formée d'une seule pièce avec les nervures et/ou comme tuyau à paroi pleine.

20. Agencement de raccordement de tuyau pour le raccordement détachable d'une première conduite de raccordement (20) à une seconde conduite de raccordement (21) selon l'une quelconque des revendications 1 à 19, **caractérisé en ce que** l'enveloppe (40) de section longitudinale en forme de U présente deux branches (4, 5) reliant une partie d'enveloppe (18) dirigée de préférence coaxialement par rapport à l'axe longitudinal central de la seconde conduite de raccordement ou du raccordement de tuyau, qui sont alignées parallèlement entre elles de préférence.

21. Agencement de raccordement de tuyau pour le raccordement détachable d'une première conduite de raccordement (20) à une seconde conduite de raccordement (21) selon l'une quelconque des revendications 1 à 20, **caractérisé en ce que** sur les côtés intérieurs par exemple de l'enveloppe en forme de U (40) de la traverse (5), de l'embout, d'une première branche, de la section de l'enveloppe, de la partie de bord et/ou de la pièce de collet, des joints souples élastiques, de préférence des anneaux d'étanchéité avec/ou sans collier d'étanchéité formé, des colliers d'étanchéité, des manchette d'étanchéité sont formés avec ou sans guidage latéral.

22. Agencement de raccordement de tuyau pour le raccordement détachable d'une première conduite de raccordement (20) à une seconde conduite de raccordement (21) selon l'une quelconque des revendications 1 à 21, **caractérisé en ce qu'**en raison d'une précontrainte par ressort des traverses d'encliquetage des moyens d'encliquetage du type élastique, une adhérence des forces, de frottement et / ou des formes du raccordement de tuyau avec la seconde conduite de raccordement est possible.

23. Agencement de raccordement de tuyau pour le raccordement détachable d'une première conduite de raccordement (20) à une seconde conduite de raccordement (21) selon l'une quelconque des revendications 1 à 22, **caractérisé en ce que** les traverses d'encliquetage sont inclinées dans le sens de l'ouverture inférieure de la partie inférieure.

24. Agencement de raccordement de tuyau pour le raccordement détachable d'une première conduite de raccordement (20) à une seconde conduite de raccordement (21) selon l'une quelconque des revendications 1 à 23,
**caractérisé en ce que** le côté extérieur de la seconde conduite de raccordement a une paroi lisse avec ou sans rehaussement périphérique formant une nervure sur l'extrémité supérieure de celui-ci.

25. Agencement de raccordement de tuyau pour le raccordement détachable d'une première conduite de raccordement (20) à une seconde conduite de raccordement (21) selon l'une quelconque des revendications 1 à 24, **caractérisé en ce que** la nervure comme rehaussement formant nervure est formée de manière périphérique en formant une butée ou en étages ou interrompue de manière périphérique par la formation d'un ou plusieurs étages et une partie du côté inférieur du rehaussement est mise en prise par l'embout d'encliquetage en position de fermeture.

26. Agencement de raccordement de tuyau pour le raccordement détachable d'une première conduite de raccordement (20) à une seconde conduite de raccordement (21) selon l'une quelconque des revendications 1 à 25, **caractérisé en ce que** la pièce de collet avec ses deux branches adjacentes parallèles l'une à l'autre reçoit le joint souple, le joint souple rendant étanche contre les fluides et/ou les gaz le côté extérieur de la première conduite de raccordement depuis le côté intérieur de la partie supérieure.

27. Agencement de raccordement de tuyau pour le raccordement détachable d'une première conduite de raccordement (20) à une seconde conduite de raccordement (21) selon l'une quelconque des revendications 1 à 26, **caractérisé en ce que** la première conduite de raccordement est couplée par sa première extrémité supérieure à des couvercles de puits, à d'autres conduites de raccordement ou à des cadres de couvercle de puits.

28. Agencement de raccordement de tuyau pour le raccordement détachable d'une première conduite de raccordement (20) à une seconde conduite de raccordement (21) selon l'une quelconque des revendications 1 à 27, **caractérisé en ce que** la seconde conduite de raccordement est couplée sur son autre extrémité qui n'est pas réceptionnée par la partie inférieure du raccordement de tuyau, à des puits, à des pièces de trous d'homme, à des sols de puits ou à des tuyaux de canal.

29. Agencement de raccordement de tuyau pour le raccordement détachable d'une première conduite de raccordement (20) à une seconde conduite de raccordement (21) selon l'une quelconque des revendications 1 à 28,
**caractérisé en ce que** les axes longitudinaux centraux de la première conduite de liaison, de la seconde conduite de liaison, de la partie inférieure et de la partie supérieure correspondent entre eux.

30. Agencement de raccordement de tuyau pour le raccordement détachable d'une première conduite de raccordement (20) à une seconde conduite de raccordement (21) selon l'une quelconque des revendications 1 à 29, **caractérisé en ce que** la première conduite de raccordement est poussée de manière télescopique coaxialement par rapport à l'axe longitudinal central A du raccordement de tuyau et/ou à l'axe longitudinal central A de la seconde conduite de raccordement.

31. Agencement de raccordement de tuyau pour le raccordement détachable d'une première conduite de raccordement (20) à une seconde conduite de raccordement (21) selon l'une quelconque des revendications 1 à 30, **caractérisé en ce que** les moyens d'encliquetage sont des éléments de ressort ou des étriers d'arrêt avec des branches coudées en dedans.

32. Agencement de raccordement de tuyau pour le raccordement détachable d'une première conduite de raccordement (20) à une seconde conduite de raccordement (21) selon l'une quelconque des revendications 1 à 31,
**caractérisé en ce que** en vue de dessus, la traverse, l'embout, la partie de bord et/ou la pièce de collet sont disposés de manière périphérique ou périphérique et interrompue.

33. Agencement de raccordement de tuyau pour le raccordement détachable d'une première conduite de raccordement (20) à une seconde conduite de raccordement (21) selon l'une quelconque des revendications 1 à 32,
**caractérisé en ce que** les moyens d'encliquetage (90) sont disposés de manière concentrique sur l'axe longitudinal central A de la partie inférieure (2) les moyens de contre-encliquetage sont disposés de manière concentrique sur l'axe longitudinal central A de la seconde conduite de raccordement (21) et/ou la première conduite de raccordement (20) peut être poussée parallèlement et/ou coaxialement par rapport à l'axe longitudinal média A de la seconde conduite de raccordement (21).
